# EUROPEAN PATENT APPLICATION

(11) **EP 4 772 473 A1**
(43) Date of publication of application: **08.07.2026**
(21) Application number: 24858586.1
(22) Date of filing: 28.08.2024
(51) Int. Cl.: C01B 39/38, B01J 29/80

(54) **SINGLE-CRYSTAL HOLLOW ZSM-5 MOLECULAR SIEVE, AND CATALYST CONTAINING MOLECULAR SIEVE AND PREPARATION METHOD THEREFOR AND USE THEREOF**

(30) Priority: 29.08.2023 CN 202311092518; 14.08.2024 CN 202411114581; 14.08.2024 CN 202411114985
(71) Applicant: China Petroleum & Chemical Corporation, Beijing 100728 (CN); Sinopec Research Institute of Petroleum Processing Co., Ltd., Beijing 100083 (CN)
(72) Inventor: HAN, Lei, Beijing 100083 (CN); LIN, Wei, Beijing 100083 (CN); WANG, Peng, Beijing 100083 (CN); SONG, Haitao, Beijing 100083 (CN); ZHOU, Xiang, Beijing 100083 (CN); WANG, Ruoyu, Beijing 100083 (CN); SHA, Yuchen, Beijing 100083 (CN); ZHAO, Liuzhou, Beijing 100083 (CN)
(74) Representative: Hoffmann Eitle
(86) International application number: PCT/CN2024/114963
(87) International publication number: WO 2025/045052

(57) **Abstract**

The present invention relates to a single-crystal hollow ZSM-5 zeolite, a catalyst comprising this zeolite, and their preparation methods and uses. The particle of said single-crystal hollow ZSM-5 zeolite has a single-crystal structure, an average crystal grain size of 0.8-3.5 µm, and has a double-layered cavity structure nested inside and out, wherein an inner-layered cavity is at least partially enclosed by a first wall layer of zeolite, and an outer-layered cavity is completely enclosed by a second wall layer of zeolite, and on the second wall layer of zeolite there is an epitaxially grown nano-rod shell layer. The single-crystal hollow ZSM-5 zeolite of the present invention can be used in deep catalytic cracking reaction of macromolecule, allowing to obtain higher yields of low-carbon olefins and BTX, as well as a higher ethylene/propylene ratio.

## Description

### TECHNICAL FIELD

The present invention belongs to the technical field of catalytic materials, and relates to a single-crystal hollow ZSM-5 zeolite and its preparation method and use, also relates to a catalyst for deep catalytic cracking comprising said single-crystal hollow ZSM-5 zeolite and its preparation method and use.

### BACKGROUND ART

Petroleum is an important source of vehicle fuels and organic raw materials. Petroleum is a mixture of hydrocarbons, which is often firstly fractionated during processing, with a large portion being heavy oil. However, heavy oil is difficult to use directly and requires further processing and conversion. Refineries often crack heavy oil into different products and adjust the ratios of different products via catalytic cracking according to market demands. For example, some refineries primarily pursue the production of vehicle fuels such as gasoline and diesel, some refineries primarily pursue the production of gasoline and low-carbon olefins, and others focus on producing chemical raw materials, aiming to minimize gasoline and diesel products. A key factor in catalytically cracking heavy oil into different target products is the deep catalytic cracking catalyst.

Catalysts for deep catalytic cracking are the technological core in the petrochemical field and the source of petrochemical technological progress. Deep catalytic cracking to produce low-carbon olefins is a typical high-temperature acid-catalyzed reaction, and its important core is the development and design of catalytic materials. Deep catalytic cracking often adjusts the target products according to market demands. ZSM-5 zeolite has unique pore structure, tunable acidity, and high thermal/hydrothermal stability, and is the preferred choice for the catalysts for deep catalytic cracking of hydrocarbon. However, although its regular and ordered microporous structure enhances the selectivity for specific products, it also restricts the diffusion of large-molecule hydrocarbon reactants and products, and promotes coke formation, which further covers active sites, leading to catalyst deactivation. The prior art has proposed hollow ZSM-5 zeolites, but these hollow ZSM-5 zeolites have a single morphology and mostly use large amounts of organic templates for synthesis.

Low-carbon olefins (ethylene, propylene, etc.) are important basic raw materials for the petrochemical industry. With the rapid development of the global economy, the petrochemical industry is in a period of rapid growth, and the demand for low-carbon olefins has increased sharply. In particular, ethylene is an important basic raw material supporting national economic and social development, known as the "mother of petrochemicals". The scale, output, and technological level of its industrial production have become an important indicator of a country's chemical industry level. Deep catalytic cracking of hydrocarbon is an important means to obtain small-molecule hydrocarbons such as ethylene and propylene from large-molecule hydrocarbons. During the deep cracking process, hydrocarbons undergo numerous parallel and consecutive reactions; besides cracking to form small-molecule hydrocarbons, they may also aromatize to form aromatics. The formed aromatics with side chains may continue cracking or dealkylation to form BTX light aromatics, or may form heavy aromatics through hydrogen transfer. In refineries, sometimes according to a need, it is desired to increase ethylene yield, sometimes it is desired to increase propylene yield, which requires flexible adjustment of product ratios.

Ethylene production mainly includes technical routes such as naphtha deep cracking, coal/methanol to olefins, catalytic cracking/deep catalytic cracking of heavy oil, and light hydrocarbon pyrolysis. Deep catalytic cracking, using heavy oil, naphtha, and light olefins as main feedstock, can produce ethylene at relatively lower reaction temperatures under the action of catalysts, offering advantages such as flexible and adjustable product distribution, lower energy consumption, and relative environmental friendliness.

Deep catalytic cracking of heavy oil involves converting heavy oil under more severe conditions based on catalytic cracking, using catalysts capable of producing more low-carbon olefins and appropriately adjusting reaction conditions, such as increasing the reaction temperature. The catalyst for deep catalytic cracking is a key factor affecting deep catalytic cracking of heavy oil. Co-producing BTX during the deep catalytic cracking process provides room for subsequent product adjustment. Aromatics generated from hydrocarbon pyrolysis are by-products of low-carbon olefin production; however, the prior art does not disclose how to achieve higher BTX yield while having higher ethylene yield.

CN103157507A discloses a catalyst for deep catalytic cracking comprising 2-50 wt% of ultrastable rare earth Y-type zeolite, 0.5-30 wt% of one or more other zeolites, 0.5-70 wt% of clay, 1.0-65 wt% of high-temperature-resistant inorganic oxide, and 0.01-12.5 wt% of rare earth oxide, characterized by strong heavy oil conversion ability and high light oil yield. This catalyst is mainly used to increase gasoline yield and contributes limitedly to increasing low-carbon olefin yield.

CN112138712A discloses a catalyst for deep catalytic cracking and its preparation method and a deep catalytic cracking process of hydrocarbon oil. The catalyst comprises, based on dry weight, 1~30 wt% of Y-type zeolite, 5~55 wt% of mesopore-rich phosphorus- and metal-containing MFI structure zeolite, 1~60 wt% of inorganic binder, and optionally 0~60 wt% of a second clay. The inorganic binder includes phosphorus-aluminum inorganic binder and/or other inorganic binders. The catalyst exhibits better ethylene selectivity in deep catalytic cracking reactions of petroleum hydrocarbon while simultaneously producing more propylene and BTX.

In recent years, the degree of feedstock heaviness and inferiority has deepened. The prior art does not involve catalysts that further improve heavy oil conversion while increasing low-carbon olefin yield under different operating conditions.

### SUMMARY OF THE INVENTION

The object of the present invention is to provide a novel zeolite usable in the petrochemical and/or fine chemical fields, its preparation method and use. This zeolite can be used to prepare catalysts used in the petrochemical and/or fine chemical fields, particularly for preparing catalyst for deep catalytic cracking that increase the yield of low-carbon olefins such as ethylene and propylene and BTX in deep catalytic cracking reactions.

The inventors have found through research that by adjusting the pore structure and acid center distribution of the zeolite, the generation of aromatics can be partially inhibited or the generation of aromatics can be promoted. This adjustability provides the possibility to adjust the distribution of deep catalytic cracking products, not only enabling the production of low-carbon olefins via deep catalytic cracking but also obtaining higher BTX components in the deep cracking products, providing a reasonable product distribution for subsequent utilization of the products. However, to date, those skilled in the art do not know how to perform such adjustment.

To this end, according to a first aspect of the present invention, it provides a single-crystal hollow ZSM-5 zeolite, the particles of said single-crystal hollow ZSM-5 zeolite have a single-crystal structure, and an average crystal grain size of 0.8-3.5 µm, and have a double-layered cavity structure nested inside and out, wherein an inner-layered cavity is at least partially enclosed by a first wall layer of zeolite, and an outer-layered cavity is completely enclosed by a second wall layer of zeolite, and on the second wall layer of zeolite there is an epitaxially grown nano-rod shell layer; preferably, said ZSM-5 zeolite crystals grow along the ac-axis direction.

According to a second aspect of the present invention, it provides a method for preparing a single-crystal hollow ZSM-5 zeolite, wherein the particles of said single-crystal hollow ZSM-5 zeolite have a single-crystal structure, an average crystal grain size of 0.8-3.5 µm, and have a double-layered cavity structure nested inside and out and an epitaxially grown nano-rod shell layer, wherein an inner-layered cavity is at least partially enclosed by a first wall layer of zeolite, and an outer-layered cavity is completely enclosed by a second wall layer of zeolite, characterized in that the method comprises step (A) preparing a zeolite crystal seed solution and step (B) preparing a single-crystal hollow ZSM-5 zeolite:
wherein step (A) comprises the following sub-steps:
(A1) mixing a first silicon source, a template agent, and water to obtain a first mixture;
(A2) subjecting the first mixture obtained in sub-step (A1) to hydrothermal dynamic crystallization to obtain a crystal seed solution;
step (B) comprises the following sub-steps:
   (B1) under stirring, sequentially adding an alkali source solution, a second silicon source dispersion, and an aluminum source dispersion into water to obtain a second mixture;
   (B2) under stirring, adding a certain amount of the aforementioned crystal seed solution to the second mixture to obtain a third mixture;
   (B3) subjecting the third mixture to hydrothermal dynamic crystallization; filtering the obtained product, optionally washing, drying, and calcining it to obtain a parent zeolite;
   (B4) mixing the obtained parent zeolite with an alkali-containing solution to perform treatment to obtain a solid product; and optionally
   (B5) treating the obtained solid product to obtain an H-type single-crystal hollow ZSM-5 zeolite; and optionally
   (B6) introducing phosphorus into the H-type single-crystal hollow ZSM-5 zeolite obtained in sub-step (B5).

According to a third aspect of the present invention, the present invention relates to the use of a single-crystal hollow ZSM-5 zeolite provided according to the aforementioned first aspect or obtained by the method according to the aforementioned second aspect, for example, in the petrochemical and/or fine chemical fields.

According to a fourth aspect of the present invention, there is also provided a catalyst, particularly a catalyst for deep catalytic cracking, containing a single-crystal hollow ZSM-5 zeolite provided according to the aforementioned first aspect or obtained by the method according to the aforementioned second aspect.

According to a fifth aspect of the present invention, there is also provided a method for preparing the catalyst according to the aforementioned fourth aspect.

According to a sixth aspect of the present invention, it also relates to the use of the catalyst according to the aforementioned fourth aspect for catalyzing the deep catalytic cracking of heavy oil to increase the yield of low-carbon olefins (ethylene, propylene, etc.) and BTX.

### BRIEF DESCRIPTION OF THE FIGURES

The figures are used to illustrate the present invention and constitute a part of the description. They are used together with the following specific embodiments to explain the present invention but do not constitute limitations on the present invention, wherein:
FIG. 1 shows a transmission electron microscopy image of the single-crystal hollow ZSM-5 zeolite prepared in Example 1.
FIG. 2 shows a Fourier transform diffraction pattern of the single-crystal hollow ZSM-5 zeolite prepared in Example 1.

### DETAILED DESCRIPTION OF THE INVENTION

The following specific embodiments describe the preferred technical solutions of the present invention in detail. It should be understood that the specific embodiments described here are only for illustrating and explaining the present invention and are not intended to limit the scope of the present invention.

Any specific numerical values disclosed in the description of the present invention (including endpoints of numerical ranges) are not limited to the precise value but should be understood to also encompass values close to that precise value, for example, all possible numerical values within the range of precise value ±5%. Furthermore, for the disclosed numerical ranges, one or more new numerical ranges can be formed by arbitrary combination between the endpoint values of the range, between endpoint values and specific point values within the range, and between various specific point values. These new numerical ranges should also be considered as specifically disclosed herein.

Unless otherwise stated, the terms used in the description of the present invention have the same meanings as commonly understood by those skilled in the art. If a term is defined herein and its definition differs from the common understanding in the art, the definition herein shall prevail.

In the description of the present invention, except for explicitly stated content, any matters or items not mentioned are directly applicable to those known in the art without any change. Moreover, any embodiment described herein can be freely combined with one or more other embodiments described herein, and the technical solutions or technical ideas thus formed are considered as part of the original disclosure or original record of the present invention and should not be regarded as new content not disclosed or anticipated herein, unless such combination is considered obviously unreasonable by those skilled in the art.

All patent and non-patent documents cited in the description of the present invention, including but not limited to textbooks and journal articles, etc., are incorporated into the description in their entirety by reference.

In the description of the present invention, the term "comprise" is synonymous with "include" and "contain", and is inclusive or open-ended, without excluding other unstated elements. It should be understood that the term "comprise" includes the exclusive and closed term "consist of...". The term "based on" is synonymous with "comprise at least 80% by weight of". Unless explicitly stated, percentages given are wt%. Furthermore, in this description, the terms "substantially" or "essentially" correspond to approximations of ±5%, preferably ±1%, very preferably ±0.5%, for example ±0.1%. For instance, an effluent substantially comprising compound A or essentially consisting of compound A corresponds to an effluent comprising at least 95 wt% of compound A.

The measurements of various parameters disclosed in the description of the present invention, if not explicitly specified, are carried out by the most conventional methods in the art.

As described above, according to the first aspect of the present invention, it provides a single-crystal hollow ZSM-5 zeolite. The particles of said single-crystal hollow ZSM-5 zeolite have a double-layered cavity structure nested inside and out and an epitaxially grown nano-rod shell layer, wherein an inner-layered cavity is at least partially enclosed by a first wall layer of zeolite, and an outer-layered cavity is completely enclosed by a second wall layer of zeolite; preferably, said ZSM-5 zeolite crystals grow along the ac-axis direction.

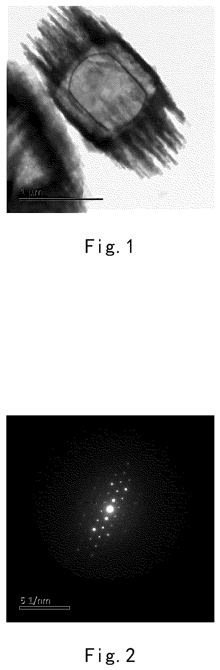

For the single-crystal hollow ZSM-5 zeolite according to the present invention, as shown in FIG. **1****,** the expression "double-layer" is intended to indicate that the single-crystal hollow ZSM-5 zeolite comprises two alternatingly surrounding wall layer of zeolites (first wall layer of zeolite and second wall layer of zeolite) and two cavities (inner and outer cavities), that is, the first wall layer of zeolite at least partially encloses the inner-layered cavity and exists in the form of at least a partially complete wall layer of zeolite between the inner-layered cavity and the outer-layered cavity of the zeolite crystal; the second wall layer of zeolite surrounds the outer-layered cavity and is present in the form of a complete wall layer of zeolite between the outer-layered cavity of the zeolite crystal and the outside world; on the outer wall of the second wall layer of zeolite, there is also an epitaxially grown nano-rod shell layer. The expression "single-crystal" is intended to indicate that the ZSM-5 zeolite particles have a single-crystal structure. The expression "hollow" in this description can be used equivalently with the expression "cavity", intended to indicate that within the crystal grain of the ZSM-5 zeolite, there is a space that does not contain ZSM-5 zeolite. This space is at least partially enclosed by a ZSM-5 wall layer of zeolite of a certain thickness. That is, the cavity of the zeolite can be formed by a zeolite wall partially enclosing it or by a zeolite wall completely enclosing it.

The single-crystal hollow ZSM-5 zeolite according to the present invention has a single-crystal structure, an average crystal grain size of 0.8-3.5 µm, preferably 1.0-3.2 µm, more preferably 1.5-3.0 µm. On the single-crystal surface, there is a nano-rod structure. The axial direction of said nano-rod structure extends along the ac-axis direction (along the (010) plane). The growth orientation of individual crystal grain of said single-crystal hollow ZSM-5 zeolite is consistent, i.e., growing along the ac-axis direction. Moreover, the morphological characteristics of this nano-rod shell layer have the characteristics of "short straight pore-channels, long sinusoidal pore-channels", which increases the number of straight pore-channel openings (further significantly improving the accessibility of active centers) and increases the number of pore-channel intersection cavities, i.e., increases the proportion of acid sites at the intersecting pore-channels, achieving dual modulation of the zeolite pore structure and acidic properties. The crystal structure and growth orientation of said single-crystal hollow ZSM-5 zeolite can be observed via high-resolution spherical aberration electron microscopy.

As described above, the single-crystal hollow ZSM-5 zeolite provided by the present invention has double-layer enclosed cavities and an epitaxially grown nano-rod shell layer. More specifically, the length of crystal grain of the single-crystal hollow ZSM-5 is 0.8-3.5 µm, preferably 1.0-3.0 µm, for example, 1.5 µm, 2.0 µm, or 2.5 µm. The width of crystal grain is 0.5-2.0 µm, preferably 0.8-1.7 µm, for example, 1.0 µm, 1.2 µm, or 1.5 µm. The length of the inner-layered cavity is 0.5-2.0 µm, preferably 0.8-1.5 µm, for example, 1.0 µm, 1.2 µm, or 1.4 µm. The width of the inner-layered cavity is 0.3-1.0 µm, preferably 0.4-0.8 µm, for example, 0.5 µm, 0.6 µm, or 0.7 µm. The thickness of the first wall layer of zeolite (i.e., the distance between the outer wall surface of the inner-layered cavity and the inner wall surface of the outer-layered cavity) is usually less than 500 nm, for example, 100-400 nm, preferably 200-350 nm, for example, 250 nm, 280 nm, or 300 nm. The thickness of the second wall layer of zeolite (i.e., the distance between the outer wall surface of the outer-layered cavity and the outer wall surface of the zeolite crystal) is usually less than 500 nm, for example, 40-400 nm, preferably 100-300 nm. The length of the epitaxially grown nano-rods is 0.5-1.0 µm, preferably 0.6-0.9 µm, for example, 0.7 µm or 0.8 µm.

The "crystal grain size" of the zeolite refers to the size of the maximum dimension of the crystal grain, which can be obtained by measuring the size at the widest part of the crystal grain projection in SEM or TEM images of the zeolite sample. The average crystal grain size is obtained by selecting any 10 crystal grains in the SEM or TEM image and calculating the arithmetic mean of their crystal grain sizes. The length of crystal grain refers to the length along the ac-axis direction, and the width refers to the dimension of the direction perpendicular to the length direction. For the present invention, the "crystal grain size" of the zeolite is equivalent to the " length of crystal grain ". The length of the inner-layered cavity refers to the size of the longest part of the inner-layered cavity projection. The width of the inner-layered cavity refers to the dimension of the direction perpendicular to the length direction of the inner-layered cavity. The thickness of the first wall layer of zeolite (i.e., the distance between the outer wall surface of the inner-layered cavity and the inner wall surface of the outer-layered cavity) is obtained by randomly measuring the distance between the outer wall surface of the inner-layered cavity and the inner wall surface of the outer-layered cavity. The length of the outer-layered cavity refers to the size of the longest part of the outer-layered cavity structure projection. The width of the outer-layered cavity refers to the dimension of the direction perpendicular to the length direction of the outer-layered cavity. The thickness of the second wall layer of zeolite (i.e., the distance between the outer wall surface of the outer-layered cavity and the outer wall surface of the zeolite crystal, excluding the thickness of the nano-rod shell layer) is obtained by randomly measuring the distance between the inner wall of the outer-layered cavity and the outer wall of the zeolite crystal. For illustration, the length of crystal grain, width of crystal grain, length of cavity, width of cavity, and wall layer thickness of zeolite of the zeolite sample are obtained by randomly selecting 10 crystal grains from SEM or TEM images of the zeolite sample, measuring their length of crystal grain, width of crystal grain, length of cavity, width of cavity, and wall layer thickness of zeolite, and calculating their arithmetic mean.

After the single-crystal hollow ZSM-5 zeolite is modified under the condition of a phosphorus/aluminum molar ratio of 1, the obtained zeolite, after hydrothermal treatment at 800°C for 17 hours, has a crystallinity retention greater than or equal to 90%, for example, 90-98% or 90.2-95%, and/or an acid amount retention greater than or equal to 30%, for example, 30-40% or 30.5-35%, indicating that this zeolite has relatively good hydrothermal stability after phosphorus modification. Crystallinity retention refers to the ratio of the relative crystallinity of the product obtained after the zeolite is modified under the condition of a phosphorus/aluminum molar ratio of 1 and then hydrothermally treated at 800°C for 17 hours (referred to as relative crystallinity after hydrothermal treatment) to the relative crystallinity of the product obtained after the zeolite is modified under the condition of a phosphorus/aluminum molar ratio of 1 (referred to as relative crystallinity before hydrothermal treatment). Acid amount retention refers to the ratio of the acid amount of the product obtained after the zeolite is modified under the condition of a phosphorus/aluminum molar ratio of 1 and then hydrothermally treated at 800°C for 17 hours (referred to as acid amount after hydrothermal treatment) to the acid amount of the product obtained after the zeolite is modified under the condition of a phosphorus/aluminum molar ratio of 1 (referred to as acid amount before hydrothermal treatment). Said hydrothermal treatment is carried out in an atmosphere of 100 vol% water vapor.

The modification of the single-crystal hollow ZSM-5 zeolite under the condition of a phosphorus/aluminum molar ratio of about 1 can be carried out using an equal-volume impregnation method, and the method is as follows: the zeolite sample is evenly spread on a watch glass or crucible, a phosphorus-containing solution is slowly poured onto the zeolite sample so that the zeolite sample ultimately appears "paste-like", stirred evenly and then dried in an oven; then ground evenly and calcined at 550 °C for 4 hours. Usually, the mass ratio of the phosphorus-containing solution to the zeolite sample is 1-3. Said phosphorus-containing solution is, for example, phosphoric acid solution or ammonium dihydrogen phosphate solution or diammonium hydrogen phosphate solution. In the present invention, the phosphorus/aluminum molar ratio of the single-crystal hollow ZSM-5 zeolite can be detected by XRF fluorescence method.

The relative crystallinity of the zeolite according to the present invention is calculated based on the XRD standard ZSM-5 zeolite reference sample from Sinopec Research Institute of Petroleum Processing Co., Ltd., considering the crystallinity of this reference sample as 100%.

According to a preferred embodiment of the aforementioned first aspect, the mesoporous specific surface area of said single-crystal hollow ZSM-5 zeolite accounts for 15-25% of the total specific surface area, preferably 18-23%, more preferably 20-22%.

According to a preferred embodiment of the aforementioned first aspect, the mesopore volume of said single-crystal hollow ZSM-5 zeolite accounts for 40-60% of the total pore volume, preferably 45-55%, more preferably 48-52%.

The total specific surface area, mesoporous specific surface area, microporous specific surface area, and pore volume of the single-crystal hollow ZSM-5 zeolite according to the present invention are measured using the low-temperature nitrogen adsorption method. The BET specific surface area is calculated using the BET formula, the micropore area is calculated using the t-plot method, and the pore size distribution is calculated using the BJH method. Therefore, the single-crystal hollow zeolite of the present invention has mainly microporous structure, while also is rich in mesoporous and macroporous structures, which can further provide multi-directional diffusion paths, expand confined spaces, and improve the accessibility of the active centers of zeolite, possessing the ability to catalyze the deep cracking of large-molecule hydrocarbon compounds.

The single-crystal hollow ZSM-5 zeolite according to the present invention can be an H-type single-crystal hollow ZSM-5 zeolite or a phosphorus-containing single-crystal hollow ZSM-5 zeolite. The phosphorus content of said phosphorus-containing single-crystal hollow ZSM-5 zeolite, calculated as P₂O₅, can be greater than 0 to 15 wt%, for example, 0.5-10 wt%. In said phosphorus-containing double-layer single-crystal mesoporous ZSM-5 zeolite, the phosphorus/aluminum molar ratio (P/Al molar ratio) is preferably 0.5-1.5, for example, 0.8-1.2 or 1.

According to a second aspect of the present invention, it provides a method for preparing a single-crystal hollow ZSM-5 zeolite, particularly the single-crystal hollow ZSM-5 zeolite according to the first aspect of the present invention, the particles of said single-crystal hollow ZSM-5 zeolite have a double-layered cavity structure nested inside and out and an epitaxially grown nano-rod shell layer, wherein an inner-layered cavity is at least partially enclosed by a first wall layer of zeolite, and an outer-layered cavity is completely enclosed by a second wall layer of zeolite. Said ZSM-5 zeolite grows along the ac-axis direction, and the entire particle has a single-crystal structure. The method comprises a step (A) for preparing a crystal seed solution and a step (B) for preparing a single-crystal hollow ZSM-5 zeolite,
wherein step (A) comprises the following sub-steps:
(A1) mixing a first silicon source, a template agent, and water to obtain a first mixture;
(A2) subjecting the first mixture obtained in sub-step (A1) to hydrothermal dynamic crystallization to obtain a crystal seed solution;
step (B) comprises the following sub-steps:
   (B1) under stirring, sequentially adding an alkali source solution, a second silicon source dispersion, and an aluminum source dispersion into water to obtain a second mixture;
   (B2) under stirring, adding a certain amount of the aforementioned crystal seed solution to the second mixture to obtain a third mixture;
   (B3) subjecting the third mixture to hydrothermal dynamic crystallization; filtering the obtained product, optionally washing, drying, and calcining it to obtain a parent zeolite;
   (B4) mixing the obtained parent zeolite with an alkali-containing solution to perform treatment to obtain a solid product; and optionally
   (B5) treating the obtained solid product to obtain an H-type single-crystal hollow ZSM-5 zeolite; and optionally
   (B6) introducing phosphorus into the H-type single-crystal hollow ZSM-5 zeolite obtained in sub-step (B5).

According to a specific embodiment of the aforementioned method for preparing a zeolite, the present invention provides a method for preparing a single-crystal hollow ZSM-5 zeolite, particularly the single-crystal hollow ZSM-5 zeolite according to the first aspect of the present invention, the method comprises a step (A) for preparing a crystal seed solution and a step (B) for preparing a single-crystal hollow ZSM-5 zeolite,
wherein step (A) comprises the following sub-steps:
Step (A) comprises the following sub-steps:
(A1) under stirring, mixing a first silicon source, a template agent, and water, preferably stirring and heating them at a temperature of 30-60°C for 2-6 hours, to obtain a mixture, referred to as a first mixture;
(A2) subjecting the first mixture obtained in sub-step (A1) to hydrothermal dynamic crystallization at a temperature of 140-180°C, for example for 8-24 hours, preferably 10-18 hours, for example, transferring the mixture to a high-pressure hydrothermal reaction kettle with a polytetrafluoroethylene inner liner and performing hydrothermal crystallization under stirring to obtain a solution containing the crystallization product, referred to as a crystal seed solution;
Step (B) comprises the following sub-steps:
   (B1-1) dissolving an alkali source in water, stirring it evenly to obtain an alkali source solution;
   (B1-2) mix an aluminum source with water, stirring them evenly to obtain an aluminum source dispersion;
   (B1-3) under stirring, mixing a second silicon source with the alkali source solution obtained in sub-step (B1-1), preferably stirring them at room temperature for more than 5 minutes, for example 10-30 minutes;
   (B1-4) optionally mixing the product obtained in sub-step (B1-3) with a certain amount of dilution water, then under stirring, mixing it with the aluminum source dispersion obtained in sub-step (B1-2), preferably stirring them at room temperature for a sufficient time, for example more than 1 minute, preferably for 30-60 minutes, to obtain a mixture, referred to as a second mixture;
   (B2) under stirring, adding a certain amount of the crystal seed solution obtained in sub-step (A2) to the second mixture obtained in sub-step (B1-4), preferably stirring them at room temperature for more than 10 minutes, for example for 1-6 hours, to obtain a mixture, referred to as a third mixture; preferably, the ratio of the mass calculated as SiO₂ in the crystal seed solution to the mass calculated as SiO₂ in the product obtained in sub-step (B1-4) is 5-20:100, for example 10:100 or 15:100;
   (B3) subjecting the third mixture obtained in sub-step (B2) to hydrothermal dynamic crystallization at a temperature above 100°C, for example for more than 1 hour, for example, hydrothermal dynamic crystallization at 140-180°C, preferably 150-170°C, for 6-48 hours, preferably 10-40 hours; filtering the obtained product, optionally washing, drying and calcining it to obtain a parent zeolite;
   (B4) under stirring, mixing the parent zeolite obtained in sub-step (B3) with an alkali-containing solution, for example stir at a temperature of 60-90°C for 20-60 minutes, to obtain a solid product, preferably, the alkali content in said alkali-containing solution is 0.4-2.0 mol/L; and optionally
   (B5) treating the solid product obtained in sub-step (B4) to obtain an H-type single-crystal hollow ZSM-5 zeolite; and optionally
   (B6) introducing phosphorus into the H-type single-crystal hollow ZSM-5 zeolite obtained in sub-step (B5).

For the present invention, room temperature means a temperature of 20-35 °C.

According to a preferred embodiment of the aforementioned method for preparing a zeolite, the silicon source (first silicon source) used in sub-step (A1) is one or more selected from methyl orthosilicate and ethyl orthosilicate, and the template agent is one or more selected from tetrapropylammonium hydroxide and tetrapropylammonium bromide.

According to a preferred embodiment of the aforementioned method for preparing a zeolite, the molar ratio of the template agent R used in sub-step (A1) to SiO₂ in the first silicon source, R/SiO₂, is 0.05-0.50, for example 0.1-0.4, and the molar ratio H₂O/SiO₂ is 10-80, for example 25-65.

According to a preferred embodiment of the aforementioned method for preparing a zeolite, the crystal grain size of the crystal seed obtained in sub-step (A2) is 200-800 nm, preferably 300-700 nm, for example 400 nm, 500 nm, or 600 nm. The crystal grain size of said crystal seed is obtained by measuring the size of the maximum dimension of randomly selected crystal grains and then calculating their average.

According to a preferred embodiment of the aforementioned method for preparing a zeolite, in sub-step (B1-1), the concentration of said alkali source solution can be 10-30 wt%, preferably 15-25 wt%. Said alkali source is one or more selected from potassium hydroxide, rubidium hydroxide, and cesium hydroxide.

According to a preferred embodiment of the aforementioned method for preparing a zeolite, in sub-step (B1-2), the concentration of said aluminum source solution is 5-20 wt%, preferably 10-15 wt%. And said aluminum source is one or more selected from aluminum sulfate, aluminum nitrate, aluminum isopropoxide, sodium aluminate, and aluminum chloride.

According to a preferred embodiment of the aforementioned method for preparing a zeolite, in sub-step (B1-3), said second silicon source is silica sol, preferably selected from ammonium-type silica sol, sodium-type silica sol, or mixtures thereof. Preferably, the SiO₂ content in said silica sol is 15-45 wt%, for example, it can be 15 wt%, 25 wt%, 30 wt%, 45 wt%, relative to the total weight of the silica sol, or any value within a content range formed by combining any two of the aforementioned values as endpoints.

According to a preferred embodiment of the aforementioned method for preparing a zeolite, the molar formulation ratio of the second mixture obtained in sub-step (B1-4) is: n(SiO₂)/n(Al₂O₃)=20-200, for example 30-100, preferably 40-80, more preferably 45-65; n(M1₂O)/n(SiO₂)=0.2-0.5, for example 0.22-0.5, preferably 0.25-0.50, more preferably 0.22-0.35; n(H₂O)/n(SiO₂)=50-150, for example 60-120, preferably 75-110, wherein M1 represents an alkali metal, is one or more selected from K, Rb, or Cs, preferably K.

According to a preferred embodiment of the aforementioned method for preparing a zeolite, in sub-step (B2), the ratio of the SiO₂ weight content in the crystal seed solution to the SiO₂ weight content in said silicon source (referred to as the second silicon source) in sub-step (B1-3) is 5-20:100, for example 6-10:100.

According to a preferred embodiment of the aforementioned method for preparing a zeolite, in sub-step (B3), the mixture obtained in sub-step (B2) is subjected to hydrothermal dynamic crystallization at a temperature above 100°C for more than 0.5 hours, preferably perform hydrothermal dynamic crystallization at a temperature of 140-180°C for 6-48 hours. For example, the mixture obtained in sub-step (B2) can be transferred to a high-pressure hydrothermal reaction kettle with a polytetrafluoroethylene inner liner and then subjected to hydrothermal dynamic crystallization. Said dynamic crystallization means carrying out the crystallization reaction of said mixture in a moving state, for example under stirring.

According to a preferred embodiment of the aforementioned method for preparing a zeolite, in sub-step (B3), the obtained product is filtered to separate the crystallized zeolite from the mother liquor, then it is washed with water to remove the mother liquor adhering to the zeolite, for example using deionized water to perform washing, then dried, then calcined. Said drying is carried out at a temperature above 40°C, for example 50-150°C, for more than 0.5 hours, preferably 1-48 hours; said calcination can be carried out at a calcination temperature of 450-600°C, for example 500-600°C, for more than 0.5 hours, for example, the calcination time is 2-12 hours, for example 3-6 hours.

The parent zeolite obtained in sub-step (B3) mainly exists in the form of solid crystals, with the central part of these solid crystals rich in silicon and the peripheral part rich in aluminum.

According to a preferred embodiment of the aforementioned method for preparing a zeolite, in sub-step (B4), under stirring, said parent zeolite is mixed with an alkali-containing solution for more than 5 minutes, for example stirred at a temperature of 60-90°C for 20-60 minutes, to treat the zeolite crystals to form a hollow structure. Then the obtained solid is recovered by filtration, optionally washed, for example with deionized water to remove residual alkali solution in the treated parent zeolite, then dried to obtain a zeolite solid. Said alkali solution is, for example, an alkali solution containing one or more of sodium hydroxide, potassium hydroxide, rubidium hydroxide, cesium hydroxide. The alkali content in said alkali solution, calculated as metal molar amount, is 0.4-2.0 mol/L, for example 0.4-1 mol/L.

According to a preferred embodiment of the aforementioned method for preparing a zeolite, in sub-step (B5), the solid product obtained in sub-step (B4) is treated to obtain an H-type single-crystal hollow ZSM-5 zeolite. According to one embodiment, said treatment comprises subjecting the solid product obtained in sub-step (B4) to ion exchange, for example ammonium exchange, filtration, optionally washing, then drying and calcination. The operational methods for ammonium exchange, drying, and calcination are well known to those skilled in the art. For example, drying can be carried out at a temperature above 40°C for at least 0.5 hours, calcination can be carried out at a temperature of 400°C or above, preferably 500-600°C, for more than 0.5 hours, preferably 1-5 hours. According to a preferred embodiment, said ammonium exchange is referred to as the first ammonium exchange, wherein the temperature of the first ammonium exchange can be 50-95°C, the exchange time can be 0.5-2 hours, and the mass ratio of ZSM-5 zeolite, ammonium salt, and water can be 1:(0.1-1):(5-15); said ammonium salt can be one or more selected from ammonium chloride, ammonium sulfate, and ammonium nitrate. Said first ammonium exchange can be performed once or multiple times.

According to a preferred embodiment of the aforementioned method for preparing a zeolite, in sub-step (B6), phosphorus is introduced into said H-type single-crystal hollow ZSM-5 zeolite to obtain a phosphorus-containing single-crystal hollow ZSM-5 zeolite. The method for introducing phosphorus can be carried out according to existing methods, for example, phosphorus can be introduced into the H-type single-crystal hollow ZSM-5 zeolite by an impregnation method, usually comprising steps of contacting said H-type single-crystal hollow ZSM-5 zeolite with an impregnation solution, drying, and calcining. The impregnation solution can be phosphoric acid solution, ammonium phosphate solution, diammonium hydrogen phosphate solution, or ammonium dihydrogen phosphate solution, or mixtures of these solutions. The methods for drying and calcination can be carried out according to existing methods, for example, oven drying, air-flow drying, rotary drying; calcination can be performed at 450-600°C for 1-6 hours.

According to a third aspect of the present invention, there is involved a use of the single-crystal hollow ZSM-5 zeolite according to the first aspect of the present invention, particularly in the petrochemical and/or fine chemical fields.

According to an embodiment of the aforementioned third aspect, the single-crystal hollow ZSM-5 zeolite according to the present invention can be applied to adsorption separation or deep catalytic cracking/ catalytic cracking of hydrocarbon compounds. When said single-crystal hollow ZSM-5 zeolite is used in deep catalytic cracking reactions of hydrocarbon compounds, it allows obtaining higher yields of low-carbon olefins (ethylene and propylene) and BTX, as well as a higher ethylene/propylene ratio. Therefore, the single-crystal hollow ZSM-5 zeolite according to the present invention has good industrial application value.

According to an embodiment of the aforementioned third aspect, said single-crystal hollow ZSM-5 zeolite is used for deep catalytic cracking of hydrocarbon oil, which comprises the step of contacting said hydrocarbon oil with said single-crystal hollow ZSM-5 zeolite to perform a step of deep catalytic cracking reaction. According to a preferred embodiment, said single-crystal hollow ZSM-5 zeolite is a hydrogen-type zeolite. According to a preferred embodiment, said single-crystal hollow ZSM-5 zeolite contains phosphorus, referred to as a phosphorus-containing single-crystal hollow ZSM-5 zeolite, wherein the phosphorus content can be, for example, 0.5-10 wt%, for example 6 wt%, 7 wt%, 8 wt%, or 9 wt%, based on the weight of the zeolite.

Since the single-crystal hollow ZSM-5 zeolite according to the present invention has double-layer enclosed cavities and an epitaxially grown nano-rod shell layer, the morphological characteristics of this nano-rod shell layer have the characteristics of "short straight pore-channels, long sinusoidal pore-channels", which increases the number of straight pore-channel openings (further improving the accessibility of active centers) and increases the number of pore-channel intersection cavities, i.e., increases the proportion of acid sites at the intersecting pore-channels, achieving dual modulation of the zeolite pore structure and acidic properties. Moreover, the wall layer of zeolites has rich pore structures, including microporous, mesoporous, and macroporous structures. Therefore, the single-crystal hollow ZSM-5 zeolite according to the present invention can provide multi-directional diffusion paths for large-molecule reactants, improve the accessibility of the active centers of zeolite, and possess excellent catalytic performance. Because said single-crystal hollow ZSM-5 zeolite has improved accessibility of the active sites of zeolite, it has an enhanced ability to catalyze the deep cracking reaction of large-molecule hydrocarbon compounds. For example, when used in deep catalytic cracking reactions of large-molecule hydrocarbon compounds, it can produce higher yields of low-carbon olefins and BTX, as well as a higher ethylene/propylene ratio.

Through the single-crystal hollow ZSM-5 zeolite synthesis method provided by the second aspect of the present invention, the single-crystal hollow ZSM-5 zeolite according to the present invention can be obtained. Moreover, in the synthesis method for the single-crystal hollow ZSM-5 zeolite according to the present invention, there is no need to use large amounts of organic templates, making the synthesis method environmentally friendly.

For the present invention, the total specific surface area, mesoporous specific surface area, microporous specific surface area, and pore volume of the single-crystal hollow ZSM-5 zeolite of the present invention are measured using the low-temperature nitrogen adsorption method, wherein the instrument used in the low-temperature nitrogen adsorption analysis is an ASAP2420 Physical Adsorption Analyzer (from Micromeritics Instrument Corporation, USA), measurement is performed according to the following experimental method: sample pretreatment is performed in first step: weighing a certain amount of sample and charging it into a sample tube that has been measured for blank, placing it in the degassing treatment unit, and degassing it for 6 hours under conditions of furnace temperature of 300°C and vacuum degree less than 1.33 Pa; sample measurement is performed in second step: placing the pretreated sample together with tube into the measurement unit, filling the Dewar flask with liquid nitrogen, inputting the analysis file to start the measurement; the measurement process involves using the static volumetric method to determine the adsorption isotherm. The total pore volume is calculated based on the adsorption amount at P/Po = 0.98; the pore size distribution is calculated using the BJH method to obtain the mesopore volume; the specific surface area is calculated using the BET formula. Test conditions include: samples are vacuum degassed at 100 °C and 300 °C for 0.5 hours and 6 hours respectively, and N₂ adsorption-desorption testing is performed at 77.4 K temperature. The adsorption amount and desorption amount of nitrogen by the purified sample under different relative pressure conditions are tested to obtain the N₂ adsorption-desorption isotherm curve. The BET specific surface area is calculated using the BET formula, the micropore area is calculated using the t-plot method, and the pore size distribution is calculated using the BJH method.

The acid amount of the zeolite according to the present invention is obtained using the NH₃-TPD method. The acid amount measurement of said zeolite uses an Autochem II 2920 temperature-programmed desorption instrument from Micromeritics, USA. Specific test method is: weighing 0.2 g of 20-40 mesh zeolite into a sample tube, placing it in the heating furnace, using He at a flow rate of 25 mL/min as carrier gas, heating up at 20 °C/min to 600 °C, purging it for 90 minutes to remove impurities adsorbed on the zeolite surface; then cooling down to 150 °C, maintaining the temperature for 5 minutes, then introducing NH₃-He gas (mass fraction 10% NH₃ and 90% He) by the system to perform adsorption for 60 minutes, then purging it with He for 120 minutes until the baseline is stable to desorb the physically adsorbed ammonia; programmed-heating up to 600 °C at a heating rate of 10 °C/min to perform desorption, maintaining the temperature for 60 minutes, desorption ends; using TCD to detect the change of gas component, and the instrument automatically integrates to obtain the total acid amount.

Fourier transform diffraction pattern, electron microscope model being JEM-ARM200F, is directly imaged using electron diffraction mode of an electron microscope.

According to a fourth aspect of the present invention, there is also involved a catalyst, particularly a catalyst for deep catalytic cracking, containing the single-crystal hollow ZSM-5 zeolite according to the aforementioned first aspect or obtained by the method according to the aforementioned second aspect.

According to a first series of schemes of the aforementioned fourth aspect of the present invention, the present invention provides a catalyst for deep catalytic cracking containing a single-crystal hollow ZSM-5 zeolite, a Y-type zeolite, and a carrier; preferably, the content of said single-crystal hollow ZSM-5 zeolite is 20-50 wt%, the content of said Y-type zeolite is 10-30 wt%, and the content of said carrier is 20-70 wt%.

According to a preferred embodiment of said first series of schemes, said Y-type zeolite is a rare earth Y-type zeolite and/or an ultra-stabilized Y-type zeolite, for example, can be a Y-type zeolite that has undergone hydrothermal ultra-stabilization and/or vapor-phase ultra-stabilization. Preferably, the content (calculated as RE₂O₃ oxide) of rare earth (RE) in said Y-type zeolite relative to the total weight of the Y-type zeolite is 2-25%. In the present invention, the rare earth content can be detected by XRF fluorescence method. Said rare earth element is preferably one or two of lanthanum and cerium.

The main active component in said catalyst comprises a single-crystal hollow ZSM-5 zeolite according to the present invention. Said zeolite has double-layer cavities and an epitaxially grown nano-rod shell layer. The nano-rod shell layer grows along the ac-axis direction ((010) plane). The morphological characteristics of this nano-rod shell layer have the feature of "short straight pore-channels, long sinusoidal pore-channels", which increases the number of straight pore-channel openings (further improving the accessibility of active centers) and increases the number of pore-channel intersection cavities, i.e., increases the proportion of acid sites at the intersecting pore-channels, achieving dual modulation of the zeolite pore structure and acidic properties, this enables the obtained catalyst to be used in deep catalytic cracking reactions of large-molecule hydrocarbon compounds, having higher ethylene yield and BTX yield, as well as a higher ethylene/propylene ratio.

According to an embodiment of said first series of schemes, said single-crystal hollow ZSM-5 zeolite contains phosphorus and has a phosphorus/aluminum molar ratio of 1 or above. After hydrothermal treatment at 800°C for 17 hours, the crystallinity retention is greater than or equal to 90%, for example, 90-98% or 90.2-95%, and/or the acid amount retention is greater than or equal to 30%, for example, 30-40% or 30.5-35%.

According to an embodiment of said first series of schemes, said single-crystal hollow ZSM-5 zeolite does not contain phosphorus or has a phosphorus/aluminum molar ratio less than 1; then, after the single-crystal hollow ZSM-5 zeolite is modified under the condition of a phosphorus/aluminum molar ratio of 1, the obtained zeolite, after hydrothermal treatment at 800°C for 17 hours, has a crystallinity retention greater than or equal to 90%, for example, 90-98% or 90.2-95%, and/or an acid amount retention greater than or equal to 30%, for example, 30-40% or 30.5-35%. This indicates that said single-crystal hollow ZSM-5 zeolite has relatively good hydrothermal stability. The phosphorus/aluminum molar ratio of the single-crystal hollow ZSM-5 zeolite can be detected by XRF fluorescence method.

According to an embodiment of said first series of schemes, said Y-type zeolite contains rare earth and may contain phosphorus or not contain phosphorus. The rare earth content in said Y-type zeolite, calculated as RE₂O₃, is 2-25 wt%, for example, 8-15 wt%. The phosphorus content, calculated as P₂O₅, can be 0-10 wt%, for example, 2-9 wt%, relative to the total weight of the Y-type zeolite.

According to an embodiment of said first series of schemes, said Y-type zeolite is an ultra-stabilized Y-type zeolite and/or a rare earth Y-type zeolite. Said ultra-stabilized Y-type zeolite can be a Y-type zeolite that has undergone hydrothermal ultra-stabilization and/or vapor-phase ultra-stabilization, for example, can be a hydrothermally ultra-stabilized Y-type zeolite, a vapor-phase ultra-stabilized Y-type zeolite, or a Y-type zeolite that has undergone both hydrothermal ultra-stabilization and vapor-phase ultra-stabilization.

Said "hydrothermal ultra-stabilization" refers to treating Y zeolite in the presence of water vapor to dealuminate the zeolite and increase the silicon/aluminum ratio of the Y zeolite. Said "vapor-phase ultra-stabilization" refers to treating the Y-type zeolite in the presence of silicon tetrachloride to dealuminate and supplement silicon in the zeolite, to increase the silicon/aluminum ratio of the zeolite. According to one embodiment, a Y-type zeolite that has undergone both hydrothermal ultra-stabilization and vapor-phase ultra-stabilization is obtained as follows: usually, the Y zeolite is first subjected to a certain degree of hydrothermal ultra-stabilization treatment, and then vapor-phase ultra-stabilization treatment is performed. Since the methods for vapor-phase ultra-stabilization and hydrothermal ultra-stabilization are well known to those skilled in the art, they are not redundantly described here.

Said vapor-phase ultra-stabilized zeolite is, for example, one or more selected from HSY-4, HSY-12, SCY-4, SCY-12. Said hydrothermally ultra-stabilized zeolite is, for example, one or more selected from DASY-2.0, DSCY-2, RSCY-12, RSCY, SOY-2, SOY-8, SOY-12. The rare earth content (calculated as RE₂O₃) of said RSCY zeolite is usually 16 wt%-18 wt%. Said rare earth Y-type zeolite can be one or more selected from REY, HRY.

According to an embodiment of said first series of schemes, said carrier is one or more selected from natural clay, alumina carrier, silica carrier, aluminum phosphate carrier, and silicon-aluminum oxides carrier.

According to a preferred embodiment, said silica carrier is one or more of neutral silica sol, acidic silica sol, or alkaline silica sol; said alumina carrier is one or more of alumina sol, acidified pseudoboehmite, hydrated alumina, and active alumina; said aluminum phosphate carrier is aluminum phosphate gel; said silicon-aluminum oxides carrier is one or more selected from solid silica-alumina material, silica-alumina sol, and silica-alumina gel.

According to an embodiment of said first series of schemes, based on the dry mass of the catalyst for deep catalytic cracking, the sodium oxide content in said catalyst for deep catalytic cracking is preferably 0.15 wt% or less.

According to a preferred embodiment of said first series of schemes, said carrier includes a silica carrier; preferably, based on the dry mass of said catalyst, the content of said silica carrier, calculated as SiO₂, is 1-20 wt%.

According to an embodiment of said first series of schemes, based on the dry mass of said catalyst for deep catalytic cracking, the content of said single-crystal hollow ZSM-5 zeolite is 20-50 wt%, for example, 25-45 wt%, or 30-40 wt%, and/or, the content of said Y-type zeolite is 10-30 wt%, preferably 10-25 wt%, for example, 12-23 wt%, and the content of said carrier is 20-70 wt%, preferably 30-60 wt%, for example, 40-50 wt%.

According to an embodiment of said first series of schemes, said carrier includes clay, alumina sol, pseudoboehmite, and silica sol. According to a preferred embodiment, in said catalyst for deep catalytic cracking: the content of said single-crystal hollow ZSM-5 zeolite is 20-50 wt%, for example, 25-45 wt% or 30-40 wt%; the content of said Y-type zeolite is 10-30 wt%, for example, 10-25 wt%; the content of said silica sol, calculated as SiO₂, is 2-20 wt%, for example, 3-15 wt% or 3-10 wt%; the content of pseudoboehmite (abbreviated as bauxite), calculated as Al₂O₃, is 5-35 wt%, for example, 10-25 wt%; the content of alumina sol, calculated as Al₂O₃, is 3-30 wt%, for example, 5-20 wt%; and the content of clay is 15-50 wt%, for example, 20-40 wt%.

According to an embodiment of said first series of schemes, based on the dry mass of the catalyst, said catalyst for deep catalytic cracking contains 20-50 wt%, preferably 25-45 wt%, more preferably 30-40 wt% of single-crystal hollow ZSM-5 zeolite; 10-30 wt%, preferably 10-20 wt% ofY-type zeolite; 20-50 wt%, preferably 20-40 wt% of clay; 10-30 wt%, preferably 10-20 wt% of acidified pseudoboehmite; 3-20 wt%, preferably 5-18 wt% of alumina sol; and 2-15 wt%, preferably 3-10 wt% of silica sol.

According to a second series of schemes of the aforementioned fourth aspect of the present invention, the present invention provides a catalyst for deep catalytic cracking containing a single-crystal hollow ZSM-5 zeolite, a Y-type zeolite, a hierarchical pore MFI zeolite, a nano zeolite, and a carrier. Said catalyst can efficiently promote heavy oil conversion. When used in deep catalytic cracking of heavy oil processes, it can effectively increase the yields of low-carbon olefins (ethylene, propylene, and C4 olefins) and BTX.

According to an embodiment of the second series of schemes of the aforementioned fourth aspect, in said catalyst for deep catalytic cracking, based on the dry weight of said catalyst for deep catalytic cracking, the content of said single-crystal hollow ZSM-5 zeolite is 10-30 wt%, preferably 12-28 wt%, more preferably 15-25 wt%; the content of said Y-type zeolite is 5-20 wt%, preferably 10-15 wt%; the content of said hierarchical pore MFI zeolite is 5-20 wt%, preferably 10-15 wt%; the content of said nano zeolite is 3-10 wt%, preferably 5-8 wt%; and the content of said carrier is 20-70 wt%, preferably 30-60 wt%. Said single-crystal hollow ZSM-5 zeolite has double-layer enclosed cavities and an epitaxially grown nano-rod shell layer. The nano-rod shell layer grows along the ac-axis direction, and the entire particle has a single-crystal structure. Preferably, the rare earth content of said Y-type zeolite, calculated as RE₂O₃ (rare earth oxide), is 0-25%, relative to the dry total weight of the Y-type zeolite. Said nano zeolite has the following nano characteristics: average crystal grain size is 50 nm-500 nm, and the pore opening size of said nano zeolite is 0.56-0.75 nm.

According to an embodiment of the second series of schemes of the aforementioned fourth aspect, said catalyst for deep catalytic cracking comprises a single-crystal hollow ZSM-5 zeolite, a Y-type zeolite, a hierarchical pore MFI zeolite, a nano zeolite, clay, pseudoboehmite (abbreviated as bauxite), alumina sol, and silica sol. Based on the dry weight of the catalyst for deep catalytic cracking, said catalyst for deep catalytic cracking contains, on a dry basis, 10-30 wt%, preferably 15-25 wt% of single-crystal hollow ZSM-5 zeolite; on a dry basis, 10-20 wt%, preferably 13-18 wt% of Y-type zeolite; on a dry basis, 5-20 wt%, preferably 10-15 wt% of hierarchical pore MFI zeolite; on a dry basis, 3-10 wt%, for example 5-10 wt% of nano zeolite; on a dry basis, 10-55 wt%, for example 20-50 wt% of clay; calculated as Al₂O₃, 10-30 wt%, for example 10-20 wt% of pseudoboehmite; calculated as Al₂O₃, 3-20 wt%, for example 8-15 wt% of alumina sol; and calculated as SiO₂, 2-15 wt%, for example 2-8 wt% of silica sol. Said pseudoboehmite is preferably acidified pseudoboehmite, and said acidification is carried out by methods well known to those skilled in the art.

Said single-crystal hollow ZSM-5 zeolite can be an H-type single-crystal hollow ZSM-5 zeolite or a phosphorus-containing single-crystal hollow ZSM-5 zeolite. The phosphorus content of said phosphorus-containing single-crystal hollow ZSM-5 zeolite, calculated as P₂O₅, can be greater than 0 to 15 wt%, for example, 0.5-10 wt%. Preferably, the phosphorus/aluminum molar ratio (i.e., the molar ratio of phosphorus to aluminum), abbreviated as P/Al ratio, of said phosphorus-containing single-crystal hollow ZSM-5 zeolite is 0.8-1.2, for example, 1 or above and 1.2 or below. The phosphorus/aluminum molar ratio of the single-crystal hollow ZSM-5 zeolite can be detected by XRF fluorescence method.

When said single-crystal hollow ZSM-5 zeolite contains phosphorus or has introduced phosphorus hereinto to make the phosphorus/aluminum molar ratio be 1 or above, after hydrothermal treatment at 800°C for 17 hours, the crystallinity retention is greater than or equal to 90% and/or the acid amount retention is greater than or equal to 30%. When said single-crystal hollow ZSM-5 zeolite does not contain phosphorus or has a phosphorus/aluminum molar ratio less than 1, it has the following property: for the single-crystal hollow ZSM-5 zeolite that does not contain phosphorus or has a phosphorus/aluminum molar ratio less than 1, after phosphorus is introduced to obtain a zeolite with a phosphorus/aluminum molar ratio of 1, and after hydrothermal treatment at 800°C for 17 hours, compared to said zeolite with a phosphorus/aluminum molar ratio of 1 before hydrothermal treatment, the crystallinity retention is greater than or equal to 90% and/or the acid amount retention is greater than or equal to 30%.

According to an embodiment of the second series of schemes of the aforementioned fourth aspect, the mesopore volume of said hierarchical pore MFI zeolite accounts for 40-70% of the total pore volume, preferably 50-60%. Said hierarchical pore MFI structure zeolite can be obtained commercially or prepared according to existing methods, for example, prepared according to the method disclosed in patent CN114715911A, for example, prepared according to the method disclosed in the examples or claims of that patent.

According to an embodiment of the second series of schemes of the aforementioned fourth aspect, based on the dry weight of the catalyst for deep catalytic cracking, the sodium oxide content in said catalyst for deep catalytic cracking is preferably 0.15 wt% or less.

According to an embodiment of said second series of schemes, said nano zeolite is a zeolite with a pore opening size of 0.56-0.75 nm, and can be one or more selected from zeolites having AET, AFR, AFS, AFI, BEA, BOG, CFI, CON, GME, IFR, ISV, LTL, MEI, MOR, OFF, or SAO structures; said nano zeolite is preferably at least one of selected from Beta, SAPO-5, SAPO-40, SSZ-13, CIT-1, ITQ-7, ZSM-18, mordenite, and offretite.

According to an embodiment of said second series of schemes, the rare earth content of said Y-type zeolite, calculated as RE₂O₃ oxide, is 0-25%, preferably 2-15 wt%. Said rare earth element is preferably one or two selected from lanthanum and cerium. In the present invention, the rare earth content can be detected by XRF fluorescence method.

Preferably, said Y-type zeolite contains rare earth and may also contain or not contain phosphorus. In the Y-type zeolite, the rare earth content calculated as RE₂O₃ is 0-25 wt%, and the phosphorus content calculated as P₂O₅ can be 0-10 wt%.

Said Y-type zeolite can be conventional Y-type zeolite and/or ultra-stabilized Y-type zeolite. Said ultra-stabilized Y-type zeolite is preferably a Y-type zeolite that has undergone hydrothermal ultra-stabilization and/or vapor-phase ultra-stabilization, for example, can be one or more of a Y-type zeolite that has only undergone hydrothermal ultra-stabilization, a Y-type zeolite that has only undergone vapor-phase ultra-stabilization, or a Y-type zeolite that has undergone both hydrothermal ultra-stabilization and vapor-phase ultra-stabilization. Said conventional Y-type zeolite can be a rare earth-containing Y-type zeolite. Said rare earth-containing Y-type zeolite is, for example, one or more of REY zeolite, HRY zeolite. Said hydrothermally ultra-stabilized Y-type zeolite is, for example, DASY zeolite, phosphorus-containing DASY zeolite, and/or RSCY zeolite. Said vapor-phase ultra-stabilized Y-type zeolite is, for example, USY zeolite, phosphorus-containing USY zeolite, and/or SCY zeolite.

According to a preferred embodiment of said second series of schemes, said Y-type zeolite is a rare earth Y-type zeolite and/or a rare earth-containing ultra-stabilized Y-type zeolite. Preferably, said rare earth-containing vapor-phase ultra-stabilized Y-type zeolite is, for example, one or more of HSY-4, HSY-12, SCY-4, SCY-12; and/or said rare earth-containing hydrothermally ultra-stabilized Y-type zeolite is, for example, one or more of DASY-2.0, DSCY-2, RSCY-12, RSCY (rare earth content calculated as RE₂O₃ is, for example, 16 wt%-18 wt%), SOY-2, SOY-8, SOY-12. Said rare earth Y-type zeolite is, for example, one or more of REY, HRY zeolite.

According to a preferred embodiment of said second series of schemes, said Y-type zeolite is one or more of REY zeolite, DASY zeolite, USY zeolite, phosphorus-containing DASY zeolite, phosphorus-containing USY zeolite, PSRY zeolite, HRY zeolite, HSY zeolite, SCY zeolite, RSCY zeolite.

According to a preferred embodiment of said second series of schemes, said carrier is one or more selected from natural clay, alumina carrier, silica carrier, aluminum phosphate carrier, and silicon-aluminum oxides carrier.

According to a preferred embodiment of said second series of schemes, said silica carrier is one or more of neutral silica sol, acidic silica sol, or alkaline silica sol; said alumina carrier is one or more of alumina sol, acidified pseudoboehmite, hydrated alumina, and active alumina; said aluminum phosphate carrier is aluminum phosphate gel; said silicon-aluminum oxides carrier is one or more selected from solid silica-alumina material, silica-alumina sol, and silica-alumina gel.

According to a preferred embodiment of said second series of schemes, said carrier includes a silica carrier. Based on the dry weight of said catalyst, the content of said silica carrier, calculated as SiO₂, is 1-20 wt%, for example, 5-15 wt%.

According to a preferred embodiment of said second series of schemes, based on the dry weight of said catalyst for deep catalytic cracking, the content of said single-crystal hollow ZSM-5 zeolite is 10-30 wt%, preferably 15-25 wt%, more preferably 18-22 wt%; the content of said Y-type zeolite is 10-20 wt%, preferably 13-18 wt%; the content of said hierarchical pore MFI zeolite is 5-20 wt%, preferably 10-15 wt%; the content of said nano zeolite is 5-10 wt%, preferably 6-8 wt%; and the content of said carrier is 20-65 wt%, for example, 25-60 wt% or 30-55 wt%.

According to a fifth aspect of the present invention, there is also involved a method for preparing the catalyst for deep catalytic cracking according to the aforementioned fourth aspect of the present invention.

According to a first series of schemes of the aforementioned fifth aspect, the present invention also provides a method for preparing the catalyst for deep catalytic cracking according to the first series of schemes of the fourth aspect of the present invention. The method comprises: spray-drying a slurry containing a carrier, a single-crystal hollow ZSM-5 zeolite, a Y-type zeolite, and water, and optionally calcining, wherein said single-crystal hollow ZSM-5 zeolite has double-layer enclosed cavities and an epitaxially grown nano-rod shell layer, the average crystal grain size of said single-crystal hollow ZSM-5 zeolite is preferably 0.8-3.5 µm; the nano-rods of said single-crystal hollow ZSM-5 zeolite grow along the ac-axis direction, and the entire particle has a single-crystal structure.

According to an embodiment of the first series of schemes of the aforementioned fifth aspect, said method comprises: mixing and pulping a carrier, a single-crystal hollow ZSM-5 zeolite, a Y-type zeolite, and water, to form a slurry containing the carrier, the single-crystal hollow ZSM-5 zeolite, the Y-type zeolite, and water, and then spray-drying the slurry to form catalyst particles. The method for mixing and pulping is well known to those skilled in the art.

Said carrier is selected from, for example, one or more of clay, alumina carrier, silica carrier, aluminum phosphate carrier, and silicon-aluminum oxides carrier. Said silica carrier is, for example, silica sol, which can be one or more of neutral silica sol, acidic silica sol, or alkaline silica sol. Said alumina carrier is, for example, one or more of alumina sol, acidified pseudoboehmite, hydrated alumina, and active alumina. Said aluminum phosphate carrier is aluminum phosphate gel; said silicon-aluminum oxides carrier is one or more selected from solid silica-alumina material, silica-alumina sol, and silica-alumina gel. Said clay is, for example, one or more of kaolin, hydrous kaolin, montmorillonite, diatomite, and laterite.

According to an embodiment of the first series of schemes of the aforementioned fifth aspect, the produced slurry containing the carrier, the single-crystal hollow ZSM-5 zeolite, the Y-type zeolite, and water is spray-dried and calcined. Spray-drying can both dry the material and form the catalyst. Spray-drying and calcination can be carried out by conventional spray-drying and calcination methods used by those skilled in the art. According to a preferred embodiment, the calcination temperature can be, for example, 450-600°C, and the calcination time can be, for example, 1-5 hours.

According to an embodiment of the first series of schemes of the aforementioned fifth aspect, in said method for preparing the catalyst for deep catalytic cracking, the catalyst particles obtained by spray-drying can also undergo ammonium exchange to reduce the sodium oxide content in the catalyst. Said ammonium exchange can be performed before calcination or after calcination.

According to a preferred embodiment of the first series of schemes of the aforementioned fifth aspect, the method further comprises: mixing the spray-dried catalyst particles, an ammonium salt, and water in a mass ratio of 1:(0.1-1):(5-15) to perform ammonium exchange, referred to as the second ammonium exchange, and optionally washing; preferably, conditions for said second ammonium exchange include: a temperature of 50-100°C, for example 60-80°C, time of 0.5-2 hours, for example 1-1.5 hours; said ammonium salt can be one or more selected from ammonium chloride, ammonium sulfate, and ammonium nitrate. The second ammonium exchange can be performed once or multiple times. The catalyst after ammonium exchange optionally undergoes calcination. Preferably, said second ammonium exchange render the sodium oxide content in the obtained catalyst for deep catalytic cracking not higher than 0.15 wt%.

According to a second series of schemes of the aforementioned fifth aspect, the present invention also provides a method for preparing the catalyst for deep catalytic cracking according to the second series of schemes of the fourth aspect of the present invention. The method comprises: spray-drying a slurry containing a carrier, a single-crystal hollow ZSM-5 zeolite, a Y-type zeolite, a hierarchical pore MFI zeolite, a nano zeolite, and water, and performing calcination.

According to an embodiment of the second series of schemes of the aforementioned fifth aspect, the method comprises: mixing and pulping a carrier, a single-crystal hollow ZSM-5 zeolite, a Y-type zeolite, a hierarchical pore MFI zeolite, a nano zeolite, and water, to obtain a slurry containing the carrier, the single-crystal hollow ZSM-5 zeolite, the Y-type zeolite, the hierarchical pore MFI zeolite, the nano zeolite, and water, and then spray-drying said slurry to form catalyst particles. The aforementioned mixing, pulping, and spray-drying methods are well known to those skilled in the art, and the present invention has no special requirements for these methods.

Said carrier includes, for example, one or more of clay, alumina carrier, silica carrier, aluminum phosphate carrier, and silicon-aluminum oxides carrier. Said silica carrier is, for example, silica sol, which can be one or more of neutral silica sol, acidic silica sol, or alkaline silica sol. Said alumina carrier is, for example, one or more of alumina sol, acidified pseudoboehmite, hydrated alumina, and active alumina. Said aluminum phosphate carrier is aluminum phosphate gel; said silicon-aluminum oxides carrier is one or more selected from solid silica-alumina material, silica-alumina sol, and silica-alumina gel. Said clay is, for example, one or more of kaolin, hydrous kaolin, montmorillonite, diatomite, and laterite.

According to an embodiment of the second series of schemes of the aforementioned fifth aspect, the slurry containing the carrier, the single-crystal hollow ZSM-5 zeolite, the Y-type zeolite, the hierarchical pore MFI zeolite, the nano zeolite, and water is spray-dried and calcined. Spray-drying can both dry the material and form the catalyst. Spray-drying and calcination can be carried out by conventional spray-drying and calcination methods used by those skilled in the art. According to a preferred embodiment, the calcination temperature can be, for example, 450-600°C, and the calcination time can be, for example, 1-5 hours.

According to an embodiment of the second series of schemes of the aforementioned fifth aspect, in said method for preparing the catalyst for deep catalytic cracking, the catalyst particles obtained by spray-drying can also undergo ammonium exchange to reduce the sodium oxide content in the catalyst. Said ammonium exchange can be performed before calcination or after calcination.

According to an embodiment of the second series of schemes of the aforementioned fifth aspect, the preparation method of catalyst for deep catalytic cracking provided by the present invention further comprises: mixing the spray-dried catalyst particles, an ammonium salt, and water in a weight ratio of 1:(0.1-1):(5-15) to perform ammonium exchange, referred to as the second ammonium exchange, and optionally washing. Preferably, conditions for said second ammonium exchange include: a temperature of 50-100°C, for example 60-80°C, time of 0.5-2 hours, for example 1-1.5 hours; said ammonium salt can be one or more selected from ammonium chloride, ammonium sulfate, and ammonium nitrate. The second ammonium exchange can be performed once or multiple times. The catalyst after ammonium exchange optionally undergoes calcination. Preferably, said second ammonium exchange results in the sodium oxide content in the obtained catalyst for deep catalytic cracking being not higher than 0.15 wt%.

According to a sixth aspect of the present invention, there is also provided a use of the catalyst for deep catalytic cracking according to the present invention for catalyze the deep catalytic cracking of heavy oil to increase the yield of low-carbon olefins (ethylene, propylene, etc.) and BTX.

According to a first series of schemes of said sixth aspect, the present invention provides a use of the catalyst for deep catalytic cracking according to the first series of schemes of the aforementioned fourth aspect for increasing the yield of ethylene and BTX in deep catalytic cracking of heavy oil, wherein said catalyst for deep catalytic cracking contains the single-crystal hollow ZSM-5 zeolite according to the present invention, a Y-type zeolite, and a carrier; preferably, said catalyst for deep catalytic cracking is contacted with heavy oil in a fluidized bed reactor to perform a deep catalytic cracking reaction.

According to a preferred embodiment of the first series of schemes of the sixth aspect, said deep catalytic cracking reaction temperature is 550-650°C, preferably 580-620°C; the catalyst-to-oil ratio by weight is 5-30, preferably 8-20; and the weight hourly space velocity is, for example, 5-30 h⁻¹, for example 8-20 h⁻¹.

According to a preferred embodiment of the first series of schemes of the sixth aspect, said catalyst for deep catalytic cracking comprises the single-crystal hollow ZSM-5 zeolite with a nano-rod shell layer according to the present invention, an ultra-stabilized Y-type zeolite, and a carrier. The multi-dimensional pore structure and large number of active centers of the single-crystal hollow ZSM-5 zeolite give the catalyst better accessibility of active centers and diffusion performance for large reactant molecules, allowing efficient promotion of heavy oil conversion. Using this catalyst in deep catalytic cracking of heavy oil processes can effectively increase the yields of ethylene and BTX.

The deep catalytic cracking process provided by the present invention can promote deep cracking of heavy oil, reduce diesel and heavy oil yields, and has significantly improved ethylene and BTX yields.

According to a second series of schemes of said sixth aspect, the present invention involves a use of the catalyst for deep catalytic cracking according to the second series of schemes of the fourth aspect of the present invention for increasing the yield of low-carbon olefins and BTX in deep catalytic cracking of heavy oil. Preferably, said low-carbon olefins are selected from ethylene, propylene, and C4 olefins.

According to an embodiment of the second series of schemes of said sixth aspect, said deep catalytic cracking is performed in a fluidized bed reactor. Preferably, the reaction temperature for said deep catalytic cracking is 550-650°C, preferably 580-620°C; the catalyst-to-oil ratio by weight is 5-30, preferably 8-20; and the weight hourly space velocity is, for example, 5-30 h⁻¹, for example 8-20 h⁻¹.

Other characteristics and advantages of the present invention will be described in detail in the subsequent specific examples.

In the following examples and comparative examples, if the raw materials used are not specifically described, they are all obtained commercially. Among them, kaolin is an industrial product from China Kaolin Company, with a solids content of 75 wt%; the pseudoboehmite used is sold by Shandong Aluminum Plant, with an alumina content of 65 wt%; alumina sol is from Sinopec Catalyst Co., Ltd. Qilu Branch, with an alumina content of 20 wt%; silica sol is from Beijing Chemical Plant, with a silica content of 25 wt% (alkaline silica sol, pH 9.5); concentrated hydrochloric acid is chemically pure, sold by Beijing Chemical Plant. Among them, Y-type zeolite, brand RSCY-12 (rare earth content of 12 wt%, silicon/aluminum molar ratio (SiO₂/Al₂O₃) of 5.2, relative crystallinity of 65%) or DSCY-2 (rare earth content of 2 wt%, silicon/aluminum molar ratio (SiO₂/Al₂O₃) of 5.2, relative crystallinity of 67%), are both sold by Sinopec Catalyst Co., Ltd. Qilu Branch. Hierarchical pore MFI zeolite, with silicon/aluminum molar ratio (SiO₂/Al₂O₃) of 25, is sold by Sinopec Catalyst Co., Ltd. Qilu Branch, has P₂O₅ content 6.5 wt%, and industrial brand RMPZ. Beta zeolite, of brand BETA-25-NKC, with pore opening size of 0.59 nm, and average crystal grain size of 200 nm, is sold by Tianjin Nanhua Catalyst Co., Ltd.

The total specific surface area and mesoporous specific surface area of zeolite samples are detected by BET adsorption analysis method. Instrument: ASAP 2420 adsorption instrument from Micromeritics, USA. Test conditions: samples are vacuum degassed at 100 °C and 300 °C for 0.5 hours and 6 hours, respectively; N2 adsorption-desorption testing is performed at 77.4 K temperature; the adsorption and desorption amounts of nitrogen by the purified sample under different relative pressure conditions are tested to obtain the N2 adsorption-desorption isotherm curve. The BET specific surface area is calculated using the BET formula, the micropore area is calculated using the t-plot method, and the pore size distribution is calculated using the BJH method.

The relative crystallinity of zeolite samples is detected by X-ray diffraction method. Instrument: Empyrean. Test conditions: tube voltage 40 kV, tube current 40 mA, Cu target Kα radiation, 2θ scanning range 5°-35°, scanning rate 2 (°)/min.

The acid amount measurement of the zeolite uses an Autochem II 2920 temperature-programmed desorption instrument from Micromeritics, USA. Test method: weighing 0.2 g of 20 ~ 40 mesh zeolite into a sample tube, placing it in the heating furnace, using He as carrier gas at a flow rate of 25 mL/min, heating up at 20 °C/min to 600 °C, purging for 90 minutes to remove impurities adsorbed on the zeolite surface. Then cooling down to 150 °C, maintaining the temperature for 5 minutes, then introducing NH₃-He gas (mass fraction 10% NH₃ and mass fraction 90% He) into the system to be adsorbed for 60 minutes, then purging with He for 120 minutes until the baseline is stable to desorb physically adsorbed ammonia. Programmed-heating up to 600 °C at a heating rate of 10 °C/min for desorption, holding for 60 minutes, desorption ends. TCD is used to detect gas component changes, and the instrument automatically integrates to obtain the total acid amount.

The room temperature involved in the following examples and comparative examples is 26°C.

Examples 1-4 are examples of preparing single-crystal hollow ZSM-5 zeolite.

### Example 1

### Preparation of crystal seed solution:

(A1) 30.0 g of ethyl orthosilicate, 34.0 g of tetrapropylammonium hydroxide, and 44.2 g of deionized water were mixed uniformly, stirred and heated at 40°C for 4 hours;
(A2) the mixture from sub-step (A1) was transferred to a high-pressure hydrothermal reaction kettle with a polytetrafluoroethylene inner liner, dynamically crystallized at 170°C for 12 hours; after crystallization ends, the crystallization product was taken out from the reaction kettle, recorded as crystal seed solution 1.

### Preparation of single-crystal hollow ZSM-5 zeolite:

(B1-1) 5.21 g of potassium hydroxide was added into 15.63 g of deionized water, stirred evenly;
(B1-2) 1.8 g of aluminum sulfate octadecahydrate was added into 16.2 g of deionized water, stirred evenly;
(B1-3) 30.20 g of silica sol (sodium-type silica sol, silica content 30 wt%, sodium oxide content 0.22 wt%, pH 9.2) was slowly added into the alkali source solution from sub-step (B1-1), stirred at room temperature for 30 minutes;
(B1-4) 214.47 g of deionized water was added to sub-step (B1-3), then under stirring, the aluminum source solution from sub-step (B1-2) was added, stirred at room temperature for 30 minutes, to obtain a mixture;
(B2) 6.34 g of crystal seed solution 1 obtained in sub-step (A2) was added to the mixture obtained in sub-step (B1-4), stirred at room temperature for 4 hours, to obtain a mixture;
(B3) the mixture obtained in sub-step (B2) was transferred to a high-pressure hydrothermal reaction kettle with a polytetrafluoroethylene inner liner, hydrothermal dynamic crystallization was performed at 170°C for 48 hours; the obtained product was filtered, washed, oven-dried, calcined at 550°C for 2 hours (the same below) to obtain zeolite M-1;
(B4) zeolite M-1 and a sodium hydroxide solution with a concentration of 0.6 mol/L were mixed uniformly, the mass ratio of zeolite M-1 to the sodium hydroxide solution being 1:10, heated up to 80°C at a rate of 4°C/min and then stirred at this temperature for 30 minutes, filtered, washed and oven-dried, to obtain zeolite M-1-J;
(B5) zeolite M-1-J : ammonium chloride : deionized water in a mass ratio of 1:1:10 were mixed uniformly, stirred and heated in a water bath at 80°C for 30 minutes, filtered, washed and oven-dried, then the dried solid : ammonium chloride : deionized water in a mass ratio of 1:0.5:10 were mixed uniformly, subjected to the second ammonium exchange, filtered, washed, oven-dried, calcined at 550 °C for 2 hours to obtain an H-type single-crystal hollow ZSM-5 zeolite, recorded as M-1-J-H.

FIG. 1 is a transmission electron microscopy image of this single-crystal hollow ZSM-5 zeolite M-1-J-H; FIG. 2 is a Fourier transform diffraction pattern of this single-crystal hollow ZSM-5 zeolite. According to FIG. 2, it can be seen that said single-crystal hollow ZSM-5 zeolite has a single-crystal structure.

### Example 2

### Preparation of crystal seed solution:

(A1) 54.8 g of ethyl orthosilicate, 29.7 g of tetrapropylammonium hydroxide, and 240.5 g of deionized water were mixed uniformly, stirred and heated at 40°C for 4 hours;
(A2) the solution from sub-step (A1) was transferred to a high-pressure hydrothermal reaction kettle with a polytetrafluoroethylene inner liner, dynamically crystallized at 170°C for 12 hours, to obtain the crystallization product, recorded as crystal seed solution 2.

### Preparation of single-crystal hollow ZSM-5 zeolite:

(B1-1) 5.46 g of potassium hydroxide was added into 24.87 g of deionized water, stirred evenly to obtain an alkali source solution;
(B1-2) 1.24 g of aluminum isopropoxide was added into 14.26 g of deionized water, stirred evenly to obtain an aluminum source solution;
(B1-3) 35.80 g of silica sol (silica content 30 wt%, same as Example 1) was slowly added into the alkali source solution from sub-step (B1-1), stirred at room temperature for 30 minutes;
(B1-4) 181.37 g of deionized water was added to sub-step (B1-3), then under stirring, the aluminum source solution from sub-step (B1-2) was added, stirred at room temperature for 30 minutes;
(B2) 10.74 g of crystal seed solution 2 was added to the solution from sub-step (B1-4), stirred at room temperature for 4 hours;
(B3) the mixture obtained in sub-step (B2) was transferred to a high-pressure hydrothermal reaction kettle with a polytetrafluoroethylene inner liner, hydrothermal dynamic crystallization was performed at 170°C for 48 hours; the obtained product was filtered, washed, oven-dried and calcined, to obtain zeolite M-2;
(B4) zeolite M-2 and a sodium hydroxide solution with a concentration of 0.4 mol/L were mixed uniformly, the mass ratio of zeolite M-2 to said alkali solution being 1:10, heated up to 80°C at a rate of 4°C/min and then stirred at this temperature for 30 minutes, filtered, washed and oven-dried, to obtain zeolite M-2-J;
(B5) zeolite M-2-J : ammonium chloride : deionized water in a mass ratio of 1:1:10 were mixed uniformly, stirred and heated in a water bath at 80°C for 30 minutes, filtered, washed and oven-dried, then the dried solid : ammonium chloride : deionized water in a mass ratio of 1:0.5:10 were mixed uniformly, subjected to the second ammonium exchange, filtered, washed, oven-dried, calcined at 550 °C for 2 hours to obtain an H-type single-crystal hollow ZSM-5 zeolite, recorded as M-2-J-H.

### Example 3

### Preparation of crystal seed solution:

(A1) 47.6 g of ethyl orthosilicate, 70.4 g of tetrapropylammonium hydroxide, and 187.6 g of deionized water were mixed uniformly, stirred and heated at 40°C for 4 hours;
(A2) the solution from sub-step (A1) was transferred to a high-pressure hydrothermal reaction kettle with a polytetrafluoroethylene inner liner, dynamically crystallized at 170°C for 12 hours;
after crystallization ended, the product was taken out, recorded as crystal seed solution 3.

### Preparation of single-crystal hollow ZSM-5 zeolite:

(B1-1) 6.70 g of potassium hydroxide was added into 26.80 g of deionized water, stirred evenly;
(B1-2) 1.20 g of sodium aluminate was added into 10.80 g of deionized water, stirred evenly;
(B1-3) 56.80 g of silica sol (silica content 30 wt%, same as Example 1) was slowly added into the alkali source solution from sub-step (B1-1), stirred at room temperature for 30 minutes;
(B1-4) 363.30 g of deionized water was added to sub-step (B1-3), then under stirring, the aluminum source solution from sub-step (B1-2) was added, stirred at room temperature for 30 minutes;
(B2) 6.34 g of crystal seed solution 3 from sub-step (A2) was added to the mixture obtained in sub-step (B1-4), stirred at room temperature for 4 hours;
(B3) the mixture obtained in sub-step (B2) was transferred to a high-pressure hydrothermal reaction kettle with a polytetrafluoroethylene inner liner, subjected to hydrothermal dynamic crystallization at 170°C for 48 hours; the obtained product was filtered, washed, oven-dried and calcined, to obtain zeolite M-3;
(B4) zeolite M-3 and a sodium hydroxide solution with a concentration of 1.0 mol/L were mixed uniformly, wherein the mass ratio of zeolite M-3 to this sodium hydroxide solution being 1:10, heated up to 80°C at a rate of 4°C/min and then stirred at this temperature for 30 minutes, filtered, washed and oven-dried, to obtain zeolite M-3-J;
(B5) zeolite M-3-J : ammonium chloride : deionized water in a mass ratio of 1:1:10 were mixed uniformly, stirred and heated in a water bath at 80°C for 30 minutes, filtered, washed and oven-dried, then mixed the dried solid : ammonium chloride : deionized water in a mass ratio of 1:0.5:10 uniformly, subjected to the second ammonium exchange, filtered, washed, oven-dried, calcined at 550 °C for 2 hours to obtain an H-type single-crystal hollow ZSM-5 zeolite, recorded as M-3-J-H.

### Example 4

### Preparation of crystal seed solution:

(A1) 43.5 g of ethyl orthosilicate, 35.9 g of tetrapropylammonium hydroxide, and 166.4 g of deionized water were mixed uniformly, stirred and heated at 40°C for 4 hours;
(A2) the solution from sub-step (A1) was transferred to a high-pressure hydrothermal reaction kettle with a polytetrafluoroethylene inner liner, dynamically crystallized at 170°C for 12 hours;
after crystallization ended, the product was taken out, recorded as crystal seed solution 4.

### Preparation of single-crystal hollow ZSM-5 zeolite:

(B1-1) 6.50 g of potassium hydroxide was added into 15.17 g of deionized water, stirred evenly;
(B1-2) 2.56 g of aluminum nitrate nonahydrate was added into 10.24 g of deionized water, stirred evenly;
(B1-3) 64.9 g of silica sol (silica content 15 wt%) was slowly added into the alkali source solution from sub-step (B1-1), stirred at room temperature for 30 minutes;
(B1-4) 225.39 g of deionized water was added to sub-step (B1-3), then under stirring, the aluminum source solution from sub-step (B1-2) was added, stirred at room temperature for 30 minutes;
(B2) 6.81 g of crystal seed solution 4 from sub-step (A2) was added to the solution from sub-step (B1-4), stirred at room temperature for 4 hours;
(B3) the mixture solution from sub-step (B2) was transferred to a high-pressure hydrothermal reaction kettle with a polytetrafluoroethylene inner liner, subjected to hydrothermal dynamic crystallization at 170°C for 48 hours; the obtained product was filtered, washed, oven-dried and calcined, to obtain zeolite M-4;
(B4) zeolite M-4 and a sodium hydroxide solution with a concentration of 0.6 mol/L were mixed uniformly, the mass ratio of zeolite M-4 to said sodium hydroxide solution being 1:10, heated up to 80°C at a rate of 4°C/min and then stirred at this temperature for 30 minutes, filtered, washed and oven-dried, to obtain zeolite M-4-J;
(B5) zeolite M-4-J : ammonium chloride : deionized water in a mass ratio of 1:1:10 were mixed uniformly, stirred and heated in a water bath at 80°C for 30 minutes, filtered, washed and oven-dried, then the dried solid : ammonium chloride : deionized water in a mass ratio of 1:0.5:10 were mixed uniformly, subjected to the second ammonium exchange, filtered, washed, oven-dried, calcined at 550 °C for 2 hours to obtain an H-type single-crystal hollow ZSM-5 zeolite, recorded as M-4-J-H.

### Comparative Example 1

Conventional ZSM-5 zeolite, which was purchased from Sinopec Catalyst Company Qilu Branch, had silicon/aluminum molar ratio (SiO₂/Al₂O₃) of 25, was recorded as DB1-H.

### Comparative Example 2

(1) conventional ZSM-5 zeolite (same as the ZSM-5 zeolite in Comparative Example 1) and a sodium hydroxide solution with a concentration of 0.2 mol/L were mixed uniformly, wherein the mass ratio of ZSM-5 zeolite to the alkali solution being 1:10, heat and stirred at 80°C for 30 minutes, filtered, washed, oven-dried;
(2) the alkali-treated conventional ZSM-5 zeolite : ammonium chloride : deionized water in a mass ratio of 1:1:10 were mixed uniformly, stirred and heated in a water bath at 80°C for 30 minutes, filtered, washed and oven-dried, then the dried solid : ammonium chloride : deionized water in a mass ratio of 1:0.5:10 were mixed uniformly, subjected to the second ammonium exchange, filtered, washed, oven-dried, calcined at 550°C for 2 hours to obtain an H-type zeolite DB2-H. The obtained H-type zeolite DB2-H did not have cavities and did not have a rod-like structure.

### Comparative Example 3

Conventional ZSM-5 zeolite, which was purchased from Sinopec Catalyst Company Qilu Branch, had silicon/aluminum molar ratio (SiO₂/Al₂O₃) of 25, and was same as the conventional ZSM-5 zeolite in Comparative Example 1.
(1) said conventional ZSM-5 zeolite and a sodium hydroxide solution with a concentration of 1.0 mol/L were mixed uniformly, wherein the mass ratio of ZSM-5 zeolite to the alkali solution being 1:10, heated and stirred at 80°C for 30 minutes, filtered, washed, oven-dried;
(2) the alkali-treated ZSM-5 zeolite : ammonium chloride : deionized water in a mass ratio of 1:1:10 were mixed uniformly, stirred and heated in a water bath at 80°C for 30 minutes, filtered, washed and oven-dried, then the dried solid : ammonium chloride : deionized water in a mass ratio of 1:0.5:10 were mixed uniformly, subjected to the second ammonium exchange, filtered, washed, oven-dried, calcined at 550°C for 2 hours to obtain an H-type zeolite DB3-H, which did not have a rod-like structure and did not have cavities.

**Table 1**

| Sample | M-1-JH | M-2-JH | M-3-JH | M-4-JH |
|---|---|---|---|---|
| Seed solution formulation ratio | | | | |
| R/SiO₂ | 0.30 | 0.14 | 0.39 | 0.22 |
| H₂O / SiO₂ | 27.91 | 57.61 | 60.68 | 53.40 |

| Molecular sieve synthesis formulation ratio | | | | |
|---|---|---|---|---|
| SiO₂ / Al₂O₃ | 56.370 | 60.085 | 50.202 | 48.692 |
| K₂O / SiO₂ | 0.296 | 0.261 | 0.229 | 0.343 |
| H₂O / SiO₂ | 98.771 | 76.257 | 86.250 | 105.194 |
| Concentration of alkaline source solution, wt% | 25.0 | 18.0 | 20.0 | 30.0 |
| Concentration of aluminum source solution, wt% | 10.0 | 8.0 | 10.0 | 20.0 |
| Ratio of SiO₂ content in the crystal seed solution to the total SiO₂ content of the silicon source in step (B1-3), wt%. | 7.0 | 10.0 | 5.0 | 7.0 |
| Alkali treatment concentration, mol/L | 0.6 | 0.4 | 1.0 | 0.6 |
| Crystal seed size, nm | 250 | 500 | 200 | 370 |
| Length of crystal grain, µm | 2.2 | 1.8 | 2.0 | 1.5 |
| Width of crystal grain, µm | 1.4 | 0.8 | 1.2 | 0.6 |
| Length of inner-layered cavity, µm | 1.5 | 0.9 | 1.1 | 0.7 |
| Width of inner-layered cavity, µm | 0.8 | 0.6 | 0.7 | 0.4 |
| Distance between the outer wall surface of inner-layered cavity and the inner wall surface of outer-layered cavity, nm | 290 | 200 | 390 | 200 |
| Length of epitaxially grown nano-rods, µm | 0.95 | 0.86 | 0.70 | *0.55* |
| Crystallization retention after hydrothermal treatment at 800 °C for 17 hours, % | 92.1 | 90.6 | 92.0 | 91.4 |
| Acid retention rate (%) after hydrothermal treatment at 800 °C for 17 hours | 32.5 | 31.7 | 33.4 | 30.9 |
| Ratio of mesoporous specific surface area to the total specific surface area, % | 21.7 | 17.8 | 23.7 | 22.3 |
| Ratio of mesopore volume to total pore volume, % | 51.3 | 46.7 | 54.6 | 50.1 |

In Table 1, the zeolite synthesis formulation ratio was the ratio of the product from step (B1-4). Crystal seed size refers to the average size of the crystal seeds, which is measured as described before; the crystal grain size of zeolite was the average grain size of the final product, which is measured as described before.

### Molecular sieve Evaluation

The zeolites prepared according to the examples and comparative examples were modified and calcined under the condition of a phosphorus/aluminum molar ratio of 1:1 (the method is as follows: evenly spreading the zeolite sample on a watch glass or crucible, slowly pouring a phosphorus-containing solution onto the zeolite sample until the zeolite sample ultimately appears "paste-like", stirring evenly and then drying in an oven; then grinding evenly, calcining at 550 °C for 4 hours). After deactivation by aging at 800°C in 100% water vapor atmosphere for 17 hours, they were pelletized, sieved to obtain 40-60 mesh particles, and evaluated on a fixed-bed microreactor unit FB. The model compounds were n-hexadecane and 1,3,5-triisopropylbenzene. Evaluation conditions were: reaction temperature of 620°C, catalyst-to-oil ratio (mass ratio) of 0.75, oil feed rate of 0.4 g/min, feed time of 300 seconds. Results are listed in Table 2 and Table 3.

**Table 2. n-hexadecane Conversion Results**

| Sample | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Material Balance, % | | | | | | | |
| Dry gas | 24.26 | 24.86 | 23.08 | 22.34 | 19.35 | 19.97 | 19.42 |
| Liquefied gas | 49.52 | 49.62 | 49.65 | 51.01 | 45.13 | 45.20 | 46.73 |
| Gasoline | 5.98 | 8.23 | 8.65 | 8.43 | 8.57 | 11.35 | 10.30 |
| Diesel fuel | 19.82 | 16.84 | 18.16 | 17.78 | 26.60 | 23.07 | 23.26 |
| Coke | 0.43 | 0.45 | 0.46 | 0.44 | 0.35 | 0.40 | 0.30 |
| Total | 100.00 | 100.00 | 100.00 | 100.00 | 100.00 | 100.00 | 100.00 |
| Dual olefins vield, % | 40.11 | 40.77 | 40.73 | 41.86 | 35.57 | 36.37 | 36.85 |
| Ethylene / propylene | 0.70 | 0.72 | 0.64 | 0.58 | 0.42 | 0.42 | 0.40 |
| BTX yield, % | 12.10 | 11.87 | 11.69 | 12.05 | 8.05 | 7.64 | 7.87 |

**Table 3. Conversion results of 1,3,5- triisopropylbenzene**

| Sample | Ex. 1 | Ex. 2 | Ex. 3 | Ex. 4 | Comp. Ex. 1 | Comp. Ex. 2 | Comp. Ex. 3 |
|---|---|---|---|---|---|---|---|
| Material balance, % | | | | | | | |
| Dry gas | 7.65 | 8.77 | 5.27 | 5.34 | 2.40 | 3.16 | 4.04 |
| Liquefied gas | 16.21 | 19.15 | 13.12 | 15.97 | 3.20 | 9.31 | 11.87 |
| Gasoline | 1.69 | 2.49 | 0.94 | 1.29 | 0.20 | 0.54 | 2.07 |
| Diesel fuel | 73.62 | 68.82 | 79.94 | 76.48 | 93.52 | 85.71 | 81.28 |
| Coke | 0.84 | 0.77 | 0.74 | 0.92 | 0.70 | 1.29 | 0.74 |
| Total | 100.00 | 100.00 | 100.00 | 100.00 | 100.00 | 100.00 | 100.00 |
| Dual olefins, % | 16.82 | 19.76 | 13.36 | 14.81 | 3.26 | 9.16 | 9.14 |
| Ethylene / Propylene | 0.53 | 0.54 | 0.36 | 0.33 | 0.18 | 0.17 | 0.30 |
| BTX yield, % | 9.61 | 10.01 | 9.80 | 9.92 | 6.53 | 7.62 | 8.01 |

From Tables 2 and 3 above, it can be seen that compared with the zeolites from the comparative examples, due to the unique morphological characteristics and high diffusion performance of the single-crystal hollow ZSM-5 zeolite provided by the present invention, in the deep catalytic cracking reactions of long-chain alkanes (n-hexadecane) and large-molecule aromatics (1,3,5-triisopropylbenzene), it has higher dual olefins yield and BTX yield, as well as a higher ethylene/propylene ratio.

In Tables 2 and 3, "dual olefins" refers to ethylene and propylene; "BTX" refers to benzene, toluene, xylene.

The following Examples 5-7 were used to illustrate the catalysts for deep catalytic cracking according to the first series of schemes of the fourth aspect of the present invention.

The following Examples 5-7 and Comparative Example 4 were examples of preparing catalysts for deep catalytic cracking.

### Examples 5-7

Examples 5-7 respectively used the single-crystal hollow ZSM-5 zeolites prepared in Examples 1-3 to prepare catalysts for deep catalytic cracking. The catalysts are numbered sequentially as follows: A1, A2, A3. Among them, the single-crystal hollow ZSM-5 zeolites prepared in Examples 1-3 were subjected to phosphorus modification by an equal volume impregnation method at a phosphorus/aluminum ratio of 1:1, then dried, calcined before use. The obtained phosphorus-containing single-crystal hollow ZSM-5 zeolites are recorded as M-1-J-HP, M-2-J-HP, M-3-J-HP sequentially. The method for preparing the catalyst for deep catalytic cracking comprises: (1) mixing pseudoboehmite (abbreviated as bauxite) and water uniformly, adding concentrated hydrochloric acid with a concentration of 36 wt% under stirring, acid/aluminum weight ratio (i.e., the weight ratio of hydrochloric acid calculated as hydrochloric acid with an HCl concentration of 36% to pseudoboehmite calculated as Al₂O₃) being 0.2; aging the obtained mixture at 70°C for 1.5 hours to obtain aged pseudoboehmite slurry; the alumina content of this aged pseudoboehmite slurry being 12 wt%; (2) mixing the aforementioned prepared single-crystal hollow ZSM-5 zeolite, Y-type zeolite, alumina sol, silica sol, kaolin, and the aforementioned aged pseudoboehmite slurry as well as deionized water uniformly to form a slurry with a solids content of 30 wt%, spray-drying to obtain catalyst microspheres; (3) calcinating the catalyst microspheres at 550°C for 4 hours; (4) performing ammonium exchange on the calcined catalyst microspheres at 80°C for 1 hour according to the mass ratio of catalyst microspheres : ammonium salt: H₂O = 1 : 1 : 10, filtering, repeating the exchange and filtration process once, and drying, wherein said ammonium salt was ammonium chloride; the sodium oxide content in the obtained catalyst for deep catalytic cracking being below 0.15 wt%. The compositions of the prepared catalysts are shown in Table 4.

### Comparative Example 4

Comparative Example 4 illustrates the preparation of a catalyst for deep catalytic cracking using the zeolite DB1-H provided according to Comparative Example 1. According to the catalyst preparation method of Example 5, phosphorus was introduced into zeolite DB1-H (recorded as DB1-HP), and it was mixed with Y-type zeolite, pseudoboehmite, silica sol, kaolin, water, and alumina sol, spray-dried to prepare microsphere catalyst, which was named DB2.

### Comparative Example 5

A hollow zeolite was prepared according to Example 1 in Chinese patent CN116174024A, then a catalyst was prepared according to the composition formulation ratio and method of Example 5, which is named DB3.

### Comparative Example 6

A catalyst was prepare according to the method of Example 5, with the difference that the contents of ZSM-5 zeolite and Y-type zeolite were different, as shown in Table 4. The catalyst is named DB4.

**Table 4. Composition of Catalyst**

| No. | Catalyst | ZSM-5 Molecular sieve | Catalyst composition, weight % | | | | | |
|---|---|---|---|---|---|---|---|---|
| | | | ZSM-5 zeolite | RSCY-12 | Kaolin | boehmite | Alumina Sol | silica sol |
| Ex. 5 | A1 | M-1-J-HP | 35 | 10 | 20 | 15 | 15 | 5 |
| Ex. 6 | A2 | M-2-J-HP | 35 | 10 | 20 | 15 | 15 | 5 |
| Ex. 7 | A3 | M-3-J-HP | 35 | 10 | 20 | 15 | 15 | 5 |
| Comp. Ex. 4 | DB2 | DB1-HP | 35 | 10 | 20 | 15 | 15 | 5 |
| Comp. Ex. 5 | DB3 | SS-1 | 35 | 10 | 20 | 15 | 15 | 5 |
| Comp. Ex. 6 | DB4 | M-1-J-HP | 10 | 35 | 20 | 15 | 15 | 5 |

In Table 4, ZSM-5 zeolite refers to the single-crystal hollow ZSM-5 zeolite according to the present invention.

### Performance Testing

The catalysts for deep catalytic cracking prepared in Examples 5-7 and Comparative Examples 4-6 were aged at 800°C in 100 vol% water vapor for 17 hours, then their deep catalytic cracking reaction performance was evaluated on a small fixed fluidized bed reactor. Evaluation conditions were: a reaction temperature of 600°C, a catalyst-to-oil ratio by mass of 10, a weight hourly space velocity of 10 h⁻¹. Heavy oil properties are shown in Table 5, and reaction results are shown in Table 6.

**Table 5. Properties of Heavy Oil**

| Properties of crude oil | |
|---|---|
| Density at 20 °C, g/cm³ | 0.921 |
| Viscosity at 80 °C, mm²/s. | 20.06 |
| Viscosity at 100 °C, mm²/s | 12.47 |
| Residual carbon value, % | 2.91 |

| Distillation range, °C | |
|---|---|
| 10% | 341 |
| 30% | 415 |
| 50% | 467 |
| 70% | 524 |
| 90% | 651 |

**Table 6. Catalytic performance evaluation results**

| Catalyst | A1 | A2 | A3 | DB2 | DB3 | DB4 |
|---|---|---|---|---|---|---|
| Reaction conditions | | | | | | |
| Reaction temperature / °C | 600 | 600 | 600 | 600 | 600 | 600 |
| Agent-to-oil ratio, by mass | 10 | 10 | 10 | 10 | 10 | 10 |

| Product mass distribution, % | | | | | | |
|---|---|---|---|---|---|---|
| Dry gas | 11.86 | 11.85 | 11.87 | 8.74 | 9.47 | 11.38 |
| Liquefied gas | 38.08 | 38.04 | 38.01 | 36.25 | 40.16 | 22.26 |
| Gasoline | 30.47 | 30.41 | 30.44 | 28.70 | 30.37 | 41.98 |
| Diesel fuel | 7.05 | 7.18 | 7.19 | 11.76 | 7.21 | 4.37 |
| Heavy oil | 3.87 | 3.90 | 3.84 | 5.86 | 3.98 | 2.14 |
| Coke | 8.67 | 8.62 | 8.65 | 8.69 | 8.81 | 17.87 |
| Ethylene, wt % | 7.04 | 6.89 | 6.91 | 5.28 | 4.78 | 2.14 |
| BTX, wt % | 6.89 | 6.84 | 6.80 | 4.17 | 3.74 | 3.87 |

From Table 6, it can be seen that the catalyst for deep catalytic cracking provided by the present invention has significantly higher ethylene yield and BTX yield.

The following Examples 8-12 are used to illustrate the catalyst for deep catalytic cracking according to the second series of schemes of the fourth aspect of the present invention. Among them, the following Examples 8-12, Comparative Examples 7-10, and Reference Example 1 are examples of preparing a catalysts for deep catalytic cracking.

### Examples 8-12

The single-crystal hollow ZSM-5 zeolites prepared in Examples 1-3 were used respectively to prepare catalysts, the catalyst are numbered sequentially as: A4, A5, A6. Among them, the single-crystal hollow ZSM-5 zeolites prepared in Examples 1-3 were subjected to phosphorus modification by an equal volume impregnation method at a phosphorus/aluminum ratio of 1:1, then oven-dried, calcined before use; they were recorded as M-1-J-HP, M-2-J-HP, M-3-J-HP sequentially. The method for preparing the catalyst for deep catalytic cracking comprises: (1) mixing pseudoboehmite and water uniformly, adding concentrated hydrochloric acid with a concentration of 36 wt% under stirring, acid/aluminum weight ratio being 0.2 (i.e., the weight ratio of hydrochloric acid (calculated as hydrochloric acid with 36 wt% HCl concentration) to pseudoboehmite calculated as Al₂O₃); aging the obtained mixture at 70°C for 1.5 hours to obtain aged pseudoboehmite slurry, the alumina content of this aged pseudoboehmite slurry being 12 wt%; (2) mixing the aforementioned prepared phosphorus-containing single-crystal hollow ZSM-5 zeolite, Y-type zeolite, hierarchical pore MFI zeolite, nano zeolite, alumina sol, silica sol, kaolin, and the aforementioned aged pseudoboehmite slurry as well as deionized water uniformly to form a slurry with a solids content of 30 wt%, spray-drying it to obtain catalyst microspheres; (3) calcinating the catalyst microspheres at 550°C for 4 hours; (4) performing ammonium exchange on the calcined catalyst microspheres at 80°C for 1 hour according to the weight ratio of catalyst microspheres : ammonium salt : H₂O = 1 : 1 : 10, filtering, repeating the exchange and filtration process once, oven-drying the product; wherein said ammonium salt was ammonium chloride, the sodium oxide content in the obtained catalyst for deep catalytic cracking was below 0.15 wt%. The compositions of the prepared catalysts are shown in Table 7.

### Comparative Example 7

Comparative Example 7 illustrates the preparation of a catalyst for deep catalytic cracking using the zeolite DB1-H provided by Comparative Example 1. According to the catalyst preparation method of Example 8, phosphorus was introduced into zeolite DB1-H at a phosphorus/aluminum molar ratio of 1 to obtain DB1-HP, then the catalyst was prepared according to the method of Example 8, which was recorded as DB5.

### Reference Example 1

Prepare a catalyst by referring to the method of Example 8, without using hierarchical pore MFI zeolite and nano zeolite, replacing them with an equal mass of single-crystal hollow ZSM-5 zeolite, and using RSCY-12 instead of said DSCY-2. The ratio was shown in Table 7. This catalyst was named BJ1.

### Comparative Example 8

A catalyst was prepared according to the method of Example 8, with the difference that said nano zeolite was not added, but replaced with an equal mass of Y zeolite. The composition formulation ratio of the catalyst is shown in Table 7. This catalyst was named DB6.

### Comparative Example 9

A catalyst was prepared according to the method of Example 8, with the difference that said hierarchical pore MFI zeolite was not added, but replaced with an equal mass of single-crystal hollow ZSM-5 zeolite. The composition formulation ratio of the catalyst is shown in Table 7. This catalyst is named DB7.

### Comparative Example 10

A catalyst was prepared according to the method of Example 8, without adding Y zeolite, hierarchical pore MFI zeolite, and nano zeolite. The composition formulation ratio of catalyst is shown in Table 7. This catalyst is named DB8.

**Table 7. Catalyst Composition**

| No. | Catalys t No. | First ZSM-5 zeolit e No. | Catalyst composition, wt % | | | | | | | |
|---|---|---|---|---|---|---|---|---|---|---|
| | | | First ZSM-5 zeolite * | DSC Y-2 | Hierarchica 1 pore MFI | Nano zeolite s | Kaoli n | Boehmit e | Alumin a Sol | Silic a sol |
| Ex. 8 | A1 | M-1-J-HP | 20 | 10 | 15 | 5 | 20 | 15 | 12 | 3 |
| Ex. 9 | A2 | M-2-J-HP | 20 | 10 | 15 | 5 | 20 | 15 | 12 | 3 |
| Ex. 10 | A3 | M-3-J-HP | 20 | 10 | 15 | 5 | 20 | 15 | 12 | 3 |
| Ex. 11 | A4 | M-1-J-HP | 30 | 5 | 5 | 10 | 20 | 15 | 12 | 3 |
| Ex. 12 | A5 | M-1-J-HP | 10 | 15 | 20 | 5 | 20 | 15 | 12 | 3 |
| Comp . Ex. 7 | DB5 | DB1-HP | 20 | 10 | 15 | 5 | 20 | 15 | 12 | 3 |
| Ref. Ex. 1 | BJ1 | M-1-J-HP | 35 | 10 (RS CY-12) | | | 20 | 15 | 15 | 5 |
| Comp . Ex. 8 | DB6 | M-1-J-HP | 20 | 15 | 15 | | 20 | 15 | 12 | 3 |
| Comp . Ex. 9 | DB7 | M-1-J-HP | 35 | 10 | | 5 | 20 | 15 | 12 | 3 |
| Comp . Ex. 10 | DB8 | M-1-J-HP | 50 | | | | 20 | 15 | 12 | 3 |

| | | | | | | | | | | |
|---|---|---|---|---|---|---|---|---|---|---|
| *In Table 7, First ZSM-5 Molecular sieve refers to the single-crystal hollow ZSM-5 zeolite according to the present invention. | | | | | | | | | | |

### Performance Testing

The catalysts for deep catalytic cracking prepared in Examples 8-12, Reference Example 1, and Comparative Examples 7-10 were aged at 800°C in 100 vol% water vapor for 17 hours, then their deep catalytic cracking reaction performance was evaluated on a small fixed fluidized bed reactor. Evaluation conditions were: a reaction temperature of 600°C, a catalyst-to-oil ratio by mass of 10, a weight hourly space velocity of 10 h⁻¹. The properties of Heavy oil are shown in Table 5, and reaction results are shown in Table 8.

**Table 8. Catalytic Performance Evaluation Results**

| Catalyst | A1 | A2 | A3 | A4 | A5 | DB5 | BJ1 | DB6 | DB7 | DB8 |
|---|---|---|---|---|---|---|---|---|---|---|
| Reaction conditions | | | | | | | | | | |
| Reaction temperature / °C | 600 | 600 | 600 | 600 | 600 | 600 | 600 | 600 | 600 | 600 |
| Agent-to-oil ratio | 10 | 10 | 10 | 10 | 10 | 10 | 10 | 10 | 10 | 10 |

| Product mass distribution, % | | | | | | | | | | |
|---|---|---|---|---|---|---|---|---|---|---|
| Dry gas | 8.76 | 8.74 | 8.73 | 8.94 | 8.23 | 7.59 | 11.86 | 8.72 | 9.72 | 8.51 |
| Liquefied gas | 42.56 | 42.48 | 42.60 | 41.15 | 40.78 | 35.01 | 38.08 | 42.34 | 40.82 | 33.65 |
| Gasoline | 28.47 | 28.52 | 28.60 | 29.66 | 30.34 | 29.10 | 30.47 | 28.54 | 29.67 | 25.74 |
| Diesel fuel | 6.97 | 7.00 | 7.02 | 6.91 | 7.85 | 11.56 | 7.05 | 7.01 | 6.57 | 14.84 |
| Heavy oil | 4.57 | 4.60 | 4.51 | 4.52 | 4.33 | 7.48 | 3.87 | 4.68 | 4.48 | 8.95 |
| Coke | 8.67 | 8.66 | 8.54 | 8.82 | 8.47 | 9.26 | 8.67 | 8.71 | 8.74 | 8.31 |
| Ethylene, wt% | 5.58 | 5.60 | 5.42 | 6.91 | 5.06 | 5.01 | 7.04 | 5.49 | 6.12 | 5.75 |
| Propylene, wt% | 24.15 | 23.87 | 22.67 | 23.45 | 21.43 | 20.48 | 19.59 | 24.32 | 22.18 | 19.67 |
| C4 olefins, % | 13.48 | 14.16 | 14.87 | 12.14 | 11.25 | 11.47 | 10.85 | 12.07 | 13.51 | 10.64 |
| Low carbon olefins, wt% | 43.21 | 43.63 | 42.96 | 42.50 | 37.74 | 36.96 | 37.48 | 41.88 | 41.81 | 36.06 |
| BTX, w % | 6.43 | 6.39 | 6.40 | 6.58 | 5.64 | 5.16 | 6.89 | 6.40 | 6.04 | 4.91 |

In Table 8, low-carbon olefins are the sum of ethylene, propylene, and C4 olefins (olefins with 4 carbon atoms per molecule). BTX was the sum of benzene, toluene, xylene.

From Table 8, it can be seen that the catalyst for deep catalytic cracking provided by the present invention has higher low-carbon olefin and BTX yields compared to the comparative catalysts for deep catalytic cracking.

## Claims

1. A single-crystal hollow ZSM-5 zeolite, **characterized in that** the particle of said single-crystal hollow ZSM-5 zeolite has a single-crystal structure, the average crystal grain size of said zeolite is 0.8-3.5 µm; and the particle has a double-layered cavity structure nested inside and out, wherein an inner-layered cavity is at least partially enclosed by a first wall layer of zeolite, and an outer-layered cavity is completely enclosed by a second wall layer of zeolite, and on the second wall layer of zeolite there is an epitaxially grown nano-rod shell layer.

2. The single-crystal hollow ZSM-5 zeolite according to claim 1, **characterized in that** said ZSM-5 zeolite crystals grow along the ac-axis direction, and/or, the length of crystal grain of said single-crystal hollow ZSM-5 zeolite is 0.8-3.5 µm, the width of crystal grain is 0.5-2.0 µm, the length of the inner-layered cavity is 0.5-2.0 µm, the width of the inner-layered cavity is 0.3-1.0 µm, the thickness of the first zeolite wall is less than 500 nm, and/or the length of the epitaxially grown nano-rods is 0.5-1.0 µm.

3. The single-crystal hollow ZSM-5 zeolite according to any one of claims 1-2, **characterized in that** after said single-crystal hollow ZSM-5 zeolite is modified under the condition of a phosphorus/aluminum molar ratio of 1, the obtained single-crystal hollow ZSM-5 zeolite, after hydrothermal treatment at 800°C for 17 hours, has a crystallinity retention greater than or equal to 90 % and/or an acid amount retention greater than or equal to 30 %.

4. The single-crystal hollow ZSM-5 zeolite according to any one of claims 1-2, **characterized in that** the mesoporous specific surface area of said single-crystal hollow ZSM-5 zeolite accounts for 15-25% of the total specific surface area, and/or its mesopore volume accounts for 40-60% of the total pore volume.

5. A method for preparing a single-crystal hollow ZSM-5 zeolite, **characterized in that** the particle of said single-crystal hollow ZSM-5 zeolite has a single-crystal structure, an average crystal grain size of 0.8-3.5 µm, and has a double-layered cavity structure nested inside and out, wherein an inner-layered cavity is at least partially enclosed by a first wall layer of zeolite, and an outer-layered cavity is completely enclosed by a second wall layer of zeolite, and on the second wall layer of zeolite there is an epitaxially grown nano-rod shell layer, wherein said method comprises a step (A) for preparing a crystal seed solution and a step (B) for preparing a single-crystal hollow ZSM-5 zeolite, wherein:
step (A) comprises the following sub-steps:
(A1) mixing a first silicon source, a template agent, and water to obtain a first mixture;
(A2) subjecting the first mixture obtained in sub-step (1) to hydrothermal dynamic crystallization to obtain a crystal seed solution;
step (B) comprises the following sub-steps:
(B1) under stirring, sequentially adding an alkali source solution, a second silicon source dispersion, and an aluminum source dispersion into water to obtain a second mixture,
(B2) under stirring, adding a certain amount of the aforementioned crystal seed solution to the second mixture to obtain a third mixture;
(B3) subjecting the third mixture to hydrothermal dynamic crystallization; filtering the obtained product, optionally performing washing, and performing drying and calcination, to obtain a parent zeolite;
(B4) mixing the obtained parent zeolite with an alkali-containing solution to perform treatment to obtain a solid product; and optionally
(B5) treating the obtained solid product to obtain an H-type single-crystal hollow ZSM-5 zeolite; and optionally
(B6) introducing phosphorus into the H-type single-crystal hollow ZSM-5 zeolite obtained in sub-step (5).

6. The method according to claim 5, **characterized in that** the method comprises a step (A) for preparing a crystal seed solution and a step (B) for preparing a single-crystal hollow ZSM-5 zeolite, wherein:
step (A) comprises the following sub-steps:
(A1) under stirring, mixing a first silicon source, a template agent, and water, preferably performing stirring and heating at a temperature of 30-60°C for 2-6 hours, to obtain a mixture, referred to as a first mixture;
(A2) subjecting the first mixture obtained in sub-step (A1) to hydrothermal dynamic crystallization at a temperature of 140-180°C for more than 1 hour, for example 8-24 hours, preferably 10-18 hours, for example, transferring the mixture to a high-pressure hydrothermal reaction kettle with a polytetrafluoroethylene inner liner and subjecting it to hydrothermal crystallization under stirring to obtain a solution containing a crystallization product, referred to as a crystal seed solution;
step (B) comprises the following sub-steps:
(B1-1) dissolving an alkali source in water, stirring it evenly to obtain an alkali source solution;
(B1-2) mixing an aluminum source with water, stirring it evenly to obtain an aluminum source dispersion;
(B1-3) under stirring, mixing a second silicon source with the alkali source solution obtained in sub-step (B1-1), preferably performing the stirring at room temperature for more than 5 minutes, for example 10-30 minutes;
(B1-4) optionally after mixing the product obtained in sub-step (B1-3) with a certain amount of dilution water, under stirring, mixing the product obtained in sub-step (B1-3) with the aluminum source dispersion obtained in sub-step (B1-2), preferably performing the stirring at room temperature for more than 1 minute, preferably performing the stirring for 30-60 minutes, to obtain a mixture, referred to as a second mixture;
(B2) under stirring, adding a certain amount of the crystal seed solution obtained in sub-step (A2) to the second mixture obtained in sub-step (B1-4), preferably performing the stirring at room temperature for more than 10 minutes, for example for 1-6 hours, to obtain a mixture, referred to as a third mixture; preferably, the ratio of the mass calculated as SiO₂ in the crystal seed solution to the mass calculated as SiO₂ in the product obtained in sub-step (B1-4) is 5-20:100, for example 10:100 or 15:100;
(B3) subjecting the third mixture obtained in sub-step (B2) to hydrothermal dynamic crystallization at a temperature above 100°C, for example for more than 1 hour, preferably performing the hydrothermal dynamic crystallization at a temperature of 140-180°C, preferably 150-170°C, for 6-48 hours, preferably 10-40 hours; filtering the obtained product, optionally washing, drying, and calcining it to obtain a parent zeolite;
(B4) under stirring, mixing the parent zeolite obtained in sub-step (B3) with an alkali-containing solution, for example performing the stirring at a temperature of 60-90°C for 20-60 minutes, preferably, the alkali content in said alkali-containing solution is 0.4-2.0 mol/L, to obtain a solid product; and optionally
(B5) treating the solid product obtained in sub-step (B4) to obtain an H-type single-crystal hollow ZSM-5 zeolite; and optionally
(B6) introducing phosphorus into the H-type single-crystal hollow ZSM-5 zeolite obtained in sub-step (B5).

7. The method according to claim 6, **characterized in that** in sub-step (A1), said first silicon source is one or more of methyl orthosilicate or ethyl orthosilicate, and/or, said template agent is one or more of tetrapropylammonium hydroxide or tetrapropylammonium bromide, preferably, the molar ratio of template agent R/SiO₂ is 0.1-0.40, and/or, the molar ratio H₂O/SiO₂ is 25-65, and/or, in sub-step (A2), the crystal grain size of said crystal seed is 200-800 nm.

8. The method according to any one of claims 6-7, **characterized in that** in sub-step (B1-1), the concentration of the alkali source solution is 10-30 wt%, and said alkali source is one or more selected from potassium hydroxide, rubidium hydroxide, or cesium hydroxide, and/or, the concentration of the aluminum source dispersion is 5-20 wt%, and the aluminum source is one or more selected from aluminum sulfate, aluminum nitrate, aluminum isopropoxide, sodium aluminate, or aluminum chloride;

9. The method according to any one of claims 6-8, **characterized in that** the molar formulation ratio of said second mixture is: n(SiO₂)/n(Al₂O₃)=20-200, for example 30-100, preferably 40-80, more preferably 45-65; n(M1₂O)/n(SiO₂)=0.2-0.5, for example 0.22-0.4, more preferably 0.22-0.35; n(H₂O)/n(SiO₂)=50-150, for example 60-120, preferably 75-110, wherein M1 represents an alkali metal, preferably one or more selected from K, Rb, or Cs.

10. The method according to any one of claims 6-9, **characterized in that** in sub-step (B1-3), said second silicon source is silica sol, preferably, said silica sol is selected from ammoniumtype silica sol, sodium-type silica sol, or mixtures thereof; the SiO₂ content in said silica sol is 15-45 wt%;

11. The method according to any one of claims 6-10, **characterized in that** in sub-step (B1-3), the stirring time at room temperature is 10-30 minutes; in sub-step (B1-4), the stirring time at room temperature is 30-60 minutes; and/or in sub-step (B3), the stirring time at room temperature is 1-6 hours; and/or in sub-step (B2), the mass ratio of SiO₂ in said crystal seed solution to SiO₂ in the second silicon source in sub-step (B1-3) is 5-20:100 or 5-10:100..

12. Use of the single-crystal hollow ZSM-5 zeolite according to any one of claims 1-4 or the single-crystal hollow ZSM-5 zeolite obtained by the method according to any one of claims 5-11, for catalyzing the deep catalytic cracking reaction of hydrocarbon oil.

13. A catalyst, particularly a catalyst for deep catalytic cracking, **characterized in that** the catalyst comprises the single-crystal hollow ZSM-5 zeolite according to any one of claims 1-4 or the single-crystal hollow ZSM-5 zeolite obtained by the method according to any one of claims 5-11.

14. The catalyst according to claim 13, **characterized in that** said catalyst further comprises a Y-type zeolite and a carrier, preferably, based on the dry mass of said catalyst, in said catalyst, the content of said single-crystal hollow ZSM-5 zeolite is 20-50 wt%, the content of said Y-type zeolite is 10-30 wt%, and the content of said carrier is 20-70 wt%.

15. The catalyst according to claim 14, **characterized in that**, based on the dry mass of said catalyst for deep catalytic cracking, said catalyst for deep catalytic cracking contains 20-50 wt% of single-crystal hollow ZSM-5 zeolite, 10-30 wt% of Y-type zeolite, 20-50 wt% of clay, 10-30 wt% of acidified pseudoboehmite, 3-20 wt% of alumina sol, and 2-15 wt% of silica sol.

16. The catalyst according to claim 13, **characterized in that** the catalyst further comprises a Y-type zeolite, a hierarchical pore MFI zeolite, a nano zeolite, and a carrier, preferably, based on the dry weight of said catalyst, in said catalyst, the content of said single-crystal hollow ZSM-5 zeolite is 10-30 wt%, the content of said Y-type zeolite is 5-20 wt%, the content of said hierarchical pore MFI zeolite is 5-20 wt%, the content of said nano zeolite is 3-10 wt%, and the content of said carrier is 20-70 wt%.

17. The catalyst according to claim 16, **characterized in that** said nano zeolite is one or more selected from zeolites having AET, AFR, AFS, AFI, BEA, BOG, CFI, CON, GME, IFR, ISV, LTL, MEI, MOR, OFF, and SAO structures; preferably at least one of Beta, SAPO-5, SAPO-40, SSZ-13, CIT-1, ITQ-7, ZSM-18, mordenite, and offretitezeolitezeolitezeolitezeolite.

18. The catalyst according to any one of claims 16-17, wherein the mesopore volume of said hierarchical pore MFI zeolite accounts for 40-70% of the total pore volume.

19. The catalyst according to any one of claims 13-18, **characterized in that** said single-crystal hollow ZSM-5 zeolite contains phosphorus or does not contain phosphorus, its phosphorus content is 0-15 wt%, preferably 0.5-10 wt%, preferably, the phosphorus/aluminum molar ratio is 0.5-1.5.

20. The catalyst according to any one of claims 14-19, **characterized in that** said Y-type zeolite is a conventional Y-type zeolite, for example one or more selected from rare earth-containing Y-type zeolite, hydrothermally ultra-stabilized and/or vapor-phase ultra-stabilized Y-type zeolite.

21. The catalyst according to any one of claims 14-20, **characterized in that** said carrier is one or more selected from natural clay, alumina carrier, silica carrier, aluminum phosphate carrier, and silicon-aluminum oxides carrier; preferably, said silica carrier is one or more selected from neutral silica sol, acidic silica sol, or alkaline silica sol; said alumina carrier is one or more selected from alumina sol, acidified pseudoboehmite, hydrated alumina, and active alumina; said aluminum phosphate carrier is selected from aluminum phosphate gel; said silicon-aluminum oxides carrier is one or more selected from solid silica-alumina material, silica-alumina sol, and silica-alumina gel; preferably, said carrier includes a silica carrier, based on the dry mass of said catalyst, the content of said silica carrier, calculated as SiO₂, is 1-20 wt%.

22. A method for preparing the catalyst according to any one of claims 14-15, **characterized in that** the method comprises: spray-drying a slurry containing a carrier, a single-crystal hollow ZSM-5 zeolite, a Y-type zeolite, and water.

23. A method for preparing the catalyst according to any one of claims 16-18, **characterized in that** the method comprises: spray-drying a slurry containing a carrier, a single-crystal hollow ZSM-5 zeolite, a Y-type zeolite, a hierarchical pore MFI zeolite, a nano zeolite, and water.

24. Use of the catalyst according to any one of claims 13-15, for deep catalytic cracking of heavy oil to increase the yield of ethylene and BTX.

25. Use of the catalyst according to claim 13 and any one of claims 16-18, for deep catalytic cracking of heavy oil to increase the yield of low-carbon olefins and BTX.

26. A deep catalytic cracking process of hydrocarbon oil, comprising contacting hydrocarbon oil with the single-crystal hollow ZSM-5 zeolite according to any one of claims 1-4 or the catalyst according to any one of claims 13-21 to perform reaction, preferably, said single-crystal hollow zeolite is a phosphorus-containing single-crystal hollow ZSM-5 zeolite and/or an H-type single-crystal hollow ZSM-5 zeolite.
